# EUROPÄISCHE PATENTANMELDUNG

(11) **EP 4 807 425 A1**
(43) Veröffentlichungstag der Anmeldung: **16.09.2026**
(21) Anmeldenummer: 26163757.3
(22) Anmeldetag: 10.03.2026
(51) Int. Cl.: G02B 21/36, G02B 21/00

(54) **BILDGEBUNGSMODUL**

(30) Priorität: 11.03.2025 DE 102025109218
(71) Anmelder: Opto GmbH, 82061 Neuried (DE)
(72) Erfinder: Riedi, Markus, 82061 Neuried (DE); Flügel, Klaus, 82061 Neuried (DE)
(74) Vertreter: Wagner & Geyer

(57) **Zusammenfassung**

Es wird ein kompaktes Bildgebungsmodul für digitale Mikroskopie-Anwendungen beschrieben. Das kompakte Bildgebungsmodul vereint in einem Gehäuse komplett integrierte und aufeinander abgestimmte Komponenten zur Bildgebung für digitale Mikroskopie-Anwendungen. Das kompakte Bildgebungsmodul weist wenigstens eine Beleuchtungsvorrichtung, wenigstens ein Objektiv, wenigstens eine Kamera und ein gemeinsames Gehäuse auf, in dem die wenigstens eine Beleuchtungsvorrichtung, das wenigstens eine Objektiv und die wenigstens eine Kamera angeordnet sind. Ferner weist das kompakte Bildgebungsmodul wenigstens eine optische Leitervorrichtung auf, die eingerichtet ist, einen einfallenden Lichtstrahl von dem Objektiv zu der wenigstens einen Kamera zu leiten, wobei die optische Leitervorrichtung eine Flüssiglinse zur Fokussierung aufweist; und wobei die Komponenten des kompakten Bildgebungsmoduls fest zueinander kalibriert sind und das Bildgebungsmodul ohne weitere Kalibrierung reversibel in ein System für digitale Mikroskopie integrierbar ist.

## Beschreibung

### Gebiet der Erfindung

Die vorliegende Erfindung betrifft ein kompaktes Bildgebungsmodul für digitale Mikroskopie-Anwendungen.

Solch ein kompaktes Bildgebungsmodul vereint in einem Gehäuse komplett integrierte und aufeinander abgestimmte Komponenten zur Bildgebung für digitale Mikroskopie-Anwendungen.

### Hintergrund der Erfindung

Üblicherweise werden Mikroskope insbesondere in Laboren für Entwicklungsaufgaben und Forschung verwendet. Bekannte Standardmikroskope bestehen aus mehreren einzelnen Komponenten, die für jede Anwendung aufeinander abgestimmt und kalibriert werden müssen.

Im Bereich der Medizin wird mit der Herstellung künstlicher Antikörper und sogenannter Organoide gearbeitet, um Medikamente und Impfstoffe herzustellen und/oder deren Wirksamkeit zu überprüfen. Es hat sich herausgestellt, dass bildgebende Verfahren im Zusammenspiel mit der Analyse über Kl-Lösungen bessere und viel detailliertere Aussagen über Wirksamkeit und Funktionsweisen treffen als traditionelle chemische Analyseverfahren. Kl-Lösungen basieren auf der Auswertung von Massendaten, in diesem Fall sind das hochaufgelöste Bilddaten. Der Wunsch, derartige Prozesse zu beschleunigen und zu präzisieren, erfordert einen erhöhten Grad der Automatisierung von Mikroskopie-Aufgaben.

Datenquellen mit verlässlichen, präzisen und wiederholbaren Daten sind zwingend notwendig, damit die erfassten Ergebnisse vergleichbar sind. Wenn man, wie bei Standardmikroskopen, beispielsweise die Vergrößerung ändert oder manuell die Beleuchtung anpasst, sind die von der Kamera erfassten Daten nicht mehr nachvollziehbar und somit nicht vergleichbar.

### Aufgabe der Erfindung

Es ist daher eine Aufgabe der vorliegenden Erfindung, ein Bildgebungsmodul vorzusehen, das wenigstens einen Nachteil bekannter Systeme und Verfahren überwindet.

In einem beispielhaften Bildgebungsmodul (auch Imaging Module) gemäß der vorliegenden Erfindung kann und/oder muss ein Benutzer manuell nichts (mehr) verändern, da dieses, vorzugsweise alle internen Komponenten davon, komplett integriert aufgebaut sind. Digitale Einstellungen und im Messverlauf gegebenenfalls notwendige Anpassungen dieser Einstellungen werden dadurch zu jedem Zeitpunkt vor, während und nach einer Messung komplett nachvollziehbar und können in die Bewertung von generierten Messdaten einfließen. Derart erzeugte Daten erfüllen, im Vergleich zu bekannten Systemen, höhere Anforderungen an Reproduzierbarkeit, Verlässlichkeit und Vergleichbarkeit.

Mittels beschleunigter Datenverarbeitungsverfahren ermöglicht es das beispielhafte Bildgebungsmodul der vorliegenden Erfindung, große Datenmengen, die durch eine Bildgenerierung entstehen, in einer Geschwindigkeit, die für Massentests notwendig ist, zu erfassen und gleichzeitig auszuwerten und zu analysieren. Lab-on-a-Chip-Lösungen (Miniaturlabore wie beispielsweise in Mikrofluidik-Chips realisiert) basieren auf Überwachungs- und/oder Quantifizierungsaufgaben, die vorzugsweise online erledigt werden. Ein beispielhaftes Bildgebungsmodul ermöglicht es ferner, solche Miniaturlabore klein und kompakt zu halten, Livedaten zu senden und schnell sowie auf praktikable Weise Regelkreise zu schließen. Gerade der Aspekt der Kompaktheit ermöglicht es nicht nur, ein entsprechendes Modul auf einfache und schnelle Weise von einer Messstation in eine nächste zu überführen, beispielsweise im gleichen Labor. Sie kann zudem problemlos im Handgepäck eines Nutzers mitreisen, beispielsweise um ein und dieselbe Messung zu einem späteren Zeitpunkt in einem völlig anderen Labor zu wiederholen.

### Zusammenfassung der Erfindung

Erfindungsgemäß ist ein kompaktes Bildgebungsmodul nach Anspruch 1 vorgesehen. Weitere Ausführungsformen sind unter anderem den Unteransprüchen zu entnehmen. Das kompakte Bildgebungsmodul weist folgende Komponenten auf: wenigstens eine Beleuchtungsvorrichtung, wenigstens ein Objektiv, wenigstens eine Kamera und ein gemeinsames Gehäuse, in dem die wenigstens eine Beleuchtungsvorrichtung, das wenigstens eine Objektiv und die wenigstens eine Kamera angeordnet sind. Das erfindungsgemäße kompakte Bildgebungsmodul weist ferner wenigstens eine optische Leitervorrichtung auf, die eingerichtet ist, einen einfallenden Lichtstrahl von dem Objektiv zu der wenigstens einen Kamera zu leiten. Die optische Leitervorrichtung weist eine Flüssiglinse zur Fokussierung und bevorzugt eine Treibervorrichtung zur Steuerung der Flüssiglinse auf. Die Komponenten sind fest zueinander kalibriert und das Bildgebungsmodul ist ohne weitere Kalibrierung reversibel in ein System für digitale Mikroskopie integrierbar ist. Die Flüssiglinse kann direkt hinter dem Objektiv angeordnet sein.

Sowohl die optische Leitervorrichtung, als auch die wenigstens eine Beleuchtungsvorrichtung können jeweils wenigstens einen Umlenkspiegel und/oder wenigstens einen Strahlenteiler und/oder wenigstens eine Tubuslinse und/oder wenigstens ein Emissionsfilter und/oder wenigstens ein Anregungsfilter aufweisen.

Die Beleuchtungsvorrichtung kann eine Auflicht-Beleuchtungsvorrichtung aufweisen. Die Auflicht-Beleuchtungsvorrichtung weist vorzugsweise wenigstens eine erste Leuchtdiode, LED, auf. Ferner ist die Auflicht-Beleuchtungsvorrichtung optional eingerichtet, wenigstens einen ersten Lichtstrahl von der wenigstens einen ersten LED zum Beleuchten eines Objekts durch das Objektiv hindurch zu emittieren.

Das gemeinsame Gehäuse kann ein Profil mit einer im Wesentlichen rechteckigen Form (genannt *linea*-Form), mit einer L-Form (genannt *compact*-Form) oder mit einer U-Form (genannt *profile*-Form) aufweisen.

Das Profil in der im Wesentlichen rechteckigen Form (*linea*) weist wenigstens zwei parallele kurze Seiten und wenigstens zwei parallele lange Seiten auf. In dieser Form ist das Objektiv vorzugsweise entweder an einer der kurzen Seiten oder an einem Randbereich einer der langen Seiten in der Nähe der kurzen Seite angeordnet.

Das Profil in der L-Form (*compact*) kann einen kurzen Schenkel und einen langen Schenkel aufweisen. In dieser Form ist das Objektiv vorzugsweise an einer Kopfseite am Ende des kurzen Schenkels angeordnet.

Das Profil in der U-Form (*profile*) kann zwei gegenüberliegende Seiten im Inneren der U-Form aufweisen. In dieser Form weist die Beleuchtungsvorrichtung vorzugsweise eine Durchlicht-Beleuchtungsvorrichtung auf.

Die Durchlicht-Beleuchtungsvorrichtung weist vorzugsweise wenigstens eine zweite Leuchtdiode, LED, auf und ist eingerichtet, wenigstens einen zweiten Lichtstrahl von einer ersten Seite der zwei gegenüberliegenden Seiten zum Durchleuchten eines Objekts zum Objektiv hin zu emittieren. Ferner kann das Objektiv eingerichtet sein, den ersten Lichtstrahl auf einer zweiten Seite der zwei gegenüberliegenden Seiten als den einfallenden Lichtstrahl zu empfangen.

Zudem kann die Durchlicht-Beleuchtungsvorrichtung ein Kontrastfilter aufweisen, das eingerichtet ist, Licht einer inhomogenen Lichtquelle homogen zu verteilen und Strahlen auszurichten. Außerdem kann die Durchlicht-Beleuchtungsvorrichtung eine LED-Treibervorrichtung zur Steuerung der LEDs, wenigstens eine Kondensorlinse und/oder wenigstens einen Umlenkspiegel aufweisen.

Das gemeinsame Gehäuse kann eine Dicke im Wesentlichen im Bereich von 8 mm bis 100 mm aufweisen. Vorzugsweise liegt die Dicke im Wesentlichen im Bereich von 8 mm bis 50 mm, weiter bevorzugt im Bereich von 30 mm bis 50 mm, besonders bevorzugt im Bereich von 40 mm. Ferner kann das kompaktes Bildgebungsmodul über einen einzigen externen Anschluss betrieben werden.

Ein erfindungsgemäßes System für digitale Mikroskopie weist einen Probenträger und das kompakte Bildgebungsmodul in der U-Form auf. In einer ersten Variante ist der Probenträger eingerichtet derart mit dem kompakten Bildgebungsmodul integriert zu werden, dass das kompakte Bildgebungsmodul auf ein zu untersuchendes Objekt ausgerichtet ist. In einer anderen Variante ist das kompakte Bildgebungsmodul eingerichtet, derart mit dem Probenträger integriert zu werden, dass das kompakte Bildgebungsmodul auf ein zu untersuchendes Objekt ausgerichtet ist.

Ein anderes erfindungsgemäßes System für digitale Mikroskopie weist eine Modul-Trägervorrichtung und das kompakte Bildgebungsmodul in L-Form oder in der rechteckigen Form auf. Die Modul-Trägervorrichtung ist eingerichtet, das kompakte Bildgebungsmodul derart zu integrieren, dass es auf ein zu untersuchendes Objekt, vorzugsweise in Relation zu einem Probenträger, ausgerichtet ist.

Ein erfindungsgemäßes Verfahren zum Integrieren des kompakten Bildgebungsmoduls in ein System für digitale Mikroskopie weist die folgenden Schritte auf: Ein einmaliges Erst-Kalibrieren der Komponenten des kompakten Bildgebungsmoduls untereinander, und ein reversibles Integrieren des kompakten Bildgebungsmoduls in ein System nach dem Erst-Kalibrieren.

Vorzugsweise beinhaltet der Schritt des reversiblen Integrierens keine weitere Kalibrierung der Komponenten des kompakten Bildgebungsmoduls untereinander. Ferner kann der Schritt des reversiblen Integrierens ferner entweder ein Befestigen des kompakten Bildgebungsmoduls an der Modul-Trägervorrichtung auf oder ein Befestigen des Probenträgers an dem kompakten Bildgebungsmodul aufweisen. Vorzugsweise wird das kompakte Bildgebungsmodul über einen einzigen externen Anschluss angeschlossen.

### Kurze Beschreibung der Zeichnungen

Die Erfindung wird nachfolgend anhand der Zeichnungen näher erläutert. In den Zeichnungen zeigt:
- Fig. 1: eine schematische, perspektivische Ansicht einer Ausführungsform gemäß der Erfindung mit einem Querschnitt in rechteckiger Form (linea-Form);
- Fig. 2: eine schematische, perspektivische Ansicht einer Ausführungsform gemäß der Erfindung mit einem Querschnitt in L- Form (*compact*-Form);
- Fig. 3: eine schematische, perspektivische Ansicht einer Ausführungsform gemäß der Erfindung mit einem Querschnitt in U-Form (*profile*-Form);
- Fig. 4A: eine schematische, perspektivische Ansicht einer Ausführungsform gemäß der Erfindung mit alternativer Komponentenanordnung;
- Fig. 4B: eine schematische, perspektivische Ansicht einer Ausführungsform gemäß der Erfindung mit alternativer Komponentenanordnung;
- Fig. 5A: eine schematische, perspektivische Ansicht eines Systems gemäß der Erfindung mit beweglichem Probenträger und Bildgebungsmodul in profile-Form;
- Fig. 5B: eine schematische, perspektivische Ansicht des Systems aus Fig. 5A;
- Fig. 6A: eine schematische, perspektivische Ansicht eines Systems gemäß der Erfindung mit beweglichem Probenträger und Bildgebungsmodul in compact-Form;
- Fig. 6B: eine schematische, perspektivische Ansicht des Systems aus Fig. 6A;
- Fig. 7A: eine schematische, perspektivische Ansicht eines Systems gemäß der Erfindung mit beweglicher Modul-Trägervorrichtung und Bildgebungsmodul in *profile*-Form;
- Fig. 7B: eine schematische, perspektivische Ansicht des Systems aus Fig. 7A;
- Fig. 8A: eine schematische, perspektivische Ansicht eines Systems gemäß der Erfindung mit beweglicher Modul-Trägervorrichtung und Bildgebungsmodul in linea-Form;
- Fig. 8B: eine schematische, perspektivische Ansicht des Systems aus Fig. 8A;
- Fig. 9A: eine schematische, perspektivische Ansicht eines Systems gemäß der Erfindung mit beweglichem Probenträger, beweglicher Modul-Trägervorrichtung und Bildgebungsmodul in compact-Form;
- Fig. 9B: eine schematische, perspektivische Ansicht des Systems aus Fig. 9A;
- Fig. 10A: eine schematische, perspektivische Ansicht eines Systems gemäß der Erfindung mit beweglichem Probenträger, beweglicher Modul-Trägervorrichtung und Bildgebungsmodul in compact-Form;
- Fig. 10B: eine schematische, perspektivische Ansicht des Systems aus Fig. 10A; und

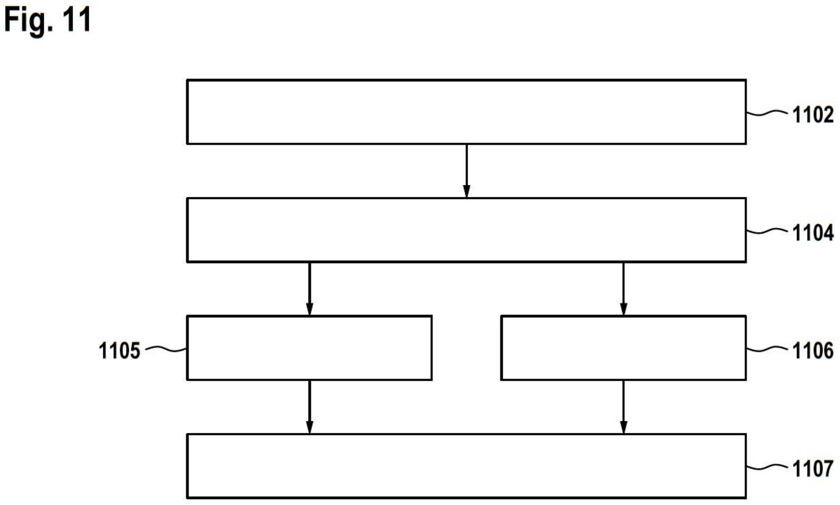

- Fig. 11: ein Verfahren zum Integrieren eines Bildgebungsmoduls gemäß der Erfindung.

### Detaillierte Beschreibung der Erfindung

In der Beschreibung verwendete Begriffe, wie oben, unten, links und rechts beziehen sich auf die Darstellung in den Zeichnungen und sind nicht einschränkend zu sehen. Der Begriff im Wesentlichen, wie er im Folgenden verwendet wird, schließt Abweichungen im Bereich von +-10% ein.

Vorliegend genannte Wertebereiche werden, falls nicht explizit ausgeschlossen, stets derart verstanden, dass untere Randbereiche mit "≥", größer oder gleich, und obere Randbereiche mit "≤", kleiner oder gleich im genannten Wertebereich als mitumfasst gelten. Somit sind insbesondere die Randbereiche selbst entweder im jeweiligen Bereich mitumfasst, können alternativ jedoch auch (einseitig) ausgeschlossen sein.

Mikroskopie-Anwendungen umfassen im Zusammenhang mit der vorliegenden Erfindung Vergrößerungen im Wesentlichen im Bereich von 0,5-fach bis 100-fach.

Im nachfolgenden wird der Aufbau eines kompakten Bildgebungsmoduls 100, 200, 300 anhand der Figuren näher erläutert. Über die Figuren hinweg werden dieselben Bezugszeichen verwendet, sofern dieselben oder ähnliche Elemente beschrieben werden.

Das kompakte Bildgebungsmodul 100, 200, 300 weist wenigstens eine Beleuchtungsvorrichtung 10, wenigstens ein Objektiv 20, wenigstens eine Kamera 30 und ein gemeinsames Gehäuse 40 auf. In dem Gehäuse 40 sind die Beleuchtungsvorrichtung 10, das Objektiv 20 und die Kamera 30 angeordnet.

Kompakt bedeutet im Zusammenhang mit allen Ausführungsbeispielen der vorliegenden Erfindung, dass alle Komponenten innerhalb des Gehäuses 40 voll integriert, mechanisch unveränderlich und optisch definiert in dem Gehäuse 40 angebracht und miteinander für eine optimale Lichtleitung kalibriert sind. Dadurch, dass man in dem Bildgebungsmodul 100, 200, 300 manuell nichts verändern kann, werden digitale Einstellungsanpassungen nachvollziehbar. Das bedeutet, dass etwaige Daten oder Messdaten, auch wenn sie an völlig unabhängigen Setups generiert werden, nicht nur verlässlich und dadurch reproduzierbar, sondern stets miteinander vergleichbar werden. Insbesondere hat das kompakte Bildgebungsmodul 100, 200, 300 eine eingebaute fixe Vergrößerung, die garantiert, dass sich - im Gegensatz zu einer verstellbaren Zoomoptik - an einem, vorzugsweise vordefinierten oder voreingestellten, optischen Pfad nichts ändert und somit die Bildentstehung immer auf die gleiche Weise geschieht.

Ferner ermöglicht der kompakte (d.h. voll integrierte) Aufbau eine modulare Verwendbarkeit des Moduls als Ganzes und einfache Plug-and-Play Anwendungen. Alternativ sind auch kabellose Lösungen möglich, beispielsweise mit kabelloses Datenübertragung über entsprechende Lösungen wie (nicht abschließend) WLAN, Bluetooth etc. und/oder mit drahtloser Energieübertragung des Moduls über entsprechende Lösungen wie (nicht abschließend) Induktion.

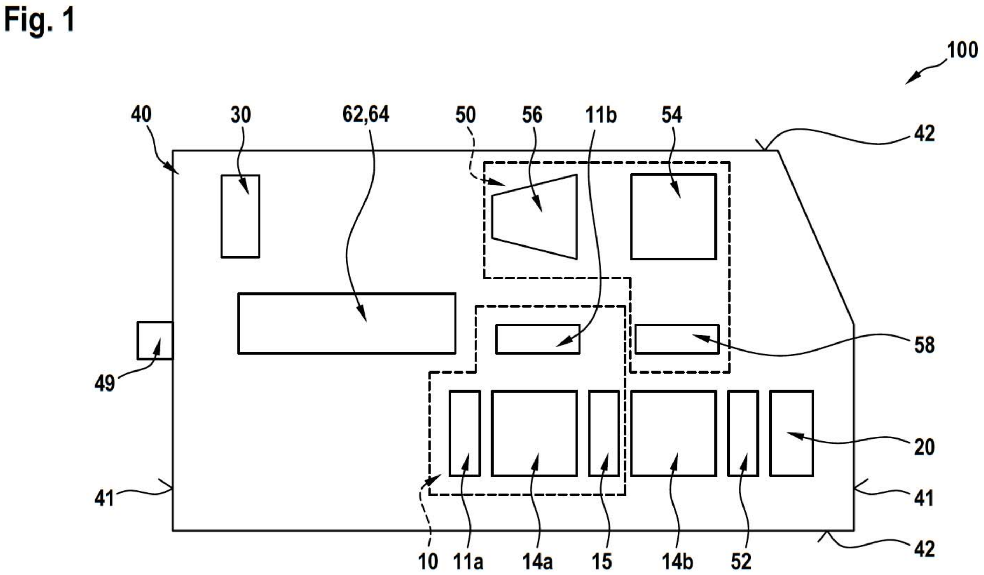

Figur 1 zeigt eine schematische, perspektivische Ansicht eines Bildgebungsmoduls 100. Das Gehäuse 40 weist einen Querschnitt mit im Wesentlichen rechteckiger Form auf. Diese Modul-Art wird im folgenden auch "*linea*" genannt. Der rechteckige Querschnitt wird durch zwei kurze gegenüberliegende Seiten 41 und zwei lange gegenüberliegende Seiten 42 (länger als die kurzen Seiten) gebildet. Die Figur 1 zeigt weiter eine leichte Abschrägung des Gehäusequerschnitts in der rechten oberen Ecke, um zu verdeutlichen, dass auch leichte Abweichungen von der Form möglich sind. Auch Rundungen anstatt gerader Kanten sind möglich.

Für das Gehäuse 40 sind neben verschiedenen Bauformen, die im Folgenden näher beschrieben werden, auch unterschiedliche Größen möglich. Das Gehäuse 40 kann eine Dicke im Wesentlichen im Bereich von 8 mm bis 100 mm aufweisen. Vorzugsweise liegt die Dicke im Wesentlichen im Bereich von 8 mm bis 50 mm, weiter bevorzugt im Bereich von 30 mm bis 50 mm, besonders bevorzugt bei 40mm.

Ferner kann das Gehäuse 40, insbesondere die Abdichtung, aufgrund des kompakten Aufbaus des Gehäuses ausgelegt werden, um der Schutzklasse IP65 gemäß der internationalen Norm IEC 60529 zu genügen. Diese Schutzklasse beschreibt die Dichtigkeit gegenüber Feuchtigkeit, die notwendig ist, um die Module in Klimaschränken und Inkubatoren zu verwenden.

Die gezeigte Beleuchtungsvorrichtung 10 weist zwei LEDs 11, ein Dichroitischer Teilerspiegel 14a (im Folgenden auch nur Dichroit oder Teilerspiegel) und ein Excitationfilter bzw. Anregungsfilter 15 auf. Die LEDs 11 erzeugen jeweils Lichtstrahlen, die über das Dichroit 14a durch das Anregungsfilter 15 geleitet werden. Durch einen weiteren Teilerspiegel 14b und eine Flüssiglinse 52 werden die Lichtstrahlen aus dem Objektiv 20 emittiert, um ein Objekt zu beleuchten.

Lichtstrahlen von dem Objekt werden über das Objektiv 20 durch die Flüssiglinse 52 auf das erste Dichroit 14b geführt und durch ein Emissionsfilter 58 gelenkt. Von dort gelangen die Lichtstrahlen in der optischen Leitervorrichtung 50 über einen Umlenkspiegel 54 und eine Linse 56, vorzugsweise eine Tubuslinse, zu der Kamera 30.

Die optische Leitervorrichtung 10 kann vorteilhaft Spektralfilter, beispielsweise Fluoreszenzfilter, aufweisen.

Die LEDs 11 dienen zur Auflicht-Beleuchtung eines Objekts, das untersucht werden soll. Eine LED 11 kann vorzugsweise eine Fluoreszenz-Auflicht-LED sein. Solch eine LED ist eine monochromatische bzw. Weißlicht-LED zur zusätzlichen Beleuchtung im Strahlengang (Koaxiale Auflicht-Beleuchtung im Hellfeld). Die Hauptanwendung ist die Fluoreszenzmikroskopie. Hier wird das Objekt mit einer niederwelligen Lichtwellenlänge angeregt und emittiert durch den enthaltenen Fluoreszenzfarbstoff (beispielsweise DAPI, FITC, GFP, TexasRed) in einer länger welligen Lichtfrequenz. Dieses Signal kann mit der Kamera 30 aufgezeichnet werden und repräsentiert beispielsweise Krebszellen. Die Kombination aus Auflicht-LED 11, dem Anregungsfilter 15, dem dichroitischen Teilerspiegel 14 und dem Emissionsfilter 58 definiert die konkrete Fluoreszenzapplikation. Für die verschiedenen Anwendungen werden entsprechende Fluoreszenzfarbstoffe verwendet, die dann die Kombination der einzelnen Komponenten definieren.

Der dichroitische Teilerspiegel 14 ist ein Filter, das einen bestimmten Wellenlängenbereich von Licht selektiv durchlässt, während es eine andere Wellenlänge basierend auf den Eigenschaften der Beschichtungsschichten reflektiert. Die Auswahl dieses Spiegels muss für jede spezielle Applikation spezifisch ausgesucht werden, um eine Fluoreszenzanordnung überhaupt zu gewährleisten.

Das Anregungsfilter 15 (Excitationfilter) wird benötigt, um zu garantieren, dass nur die gewünschte Wellenlänge zur Anregung der Fluorophore (Farbstoffe) auf die Probe gelangt. Solche Filter sind typischerweise sogenannte Kantenfilter, die alles unter einer speziellen Wellenlänge durchlassen und alles blockieren, was über der Normwellenlänge ist.

In der Mikroskopie bezeichnet Fokussieren, den Abstand des Mikroskops zum Objekt sehr feinfühlig zu verändern. Der Abstand muss bei jeder neuen Positionierung des Objekts neu eigestellt werden. Bei hohen Vergrößerungen ist nicht gewährleistet, dass alle Objektpunkte in der Schärfenebene liegen und erscheinen somit unscharf. Bei digitalen Mikroskopen wird oftmals die parallel zu Objektiv liegende Fokusachse (hier Z-Achse) bei Automatisierungsaufgaben mit einem Motor versehen. Um mittels Bildverarbeitungsalgorithmen einen sogenannten Z-Stapel (mehrere Bilder in unterschiedlichen Höhenlagen) aufzunehmen und damit ein tiefenscharfes Bild zu errechnen, sind sehr viele Fokussierungen notwendig. Eine Motorisierung ist aufwendig, fehleranfällig, groß und für viele Aufgaben zu ungenau oder zu teuer.

Eine Flüssiglinse verfügt über eine mittels Spannungsinduktion veränderbare Brennweite im optischen Strahlengang und kann dazu verwendet werden, die Fokusebene nicht mechanisch, sondern optisch zu verändern. Der Vorteil sind nicht bewegliche mechanische Teile, die kompakte Bauform und vor allem die schnelle Änderung der Brennweite. Jedoch führt eine Flüssiglinse im Strahlengang zwangsläufig zu einer Verschlechterung der optischen Qualität. Zum einen weist eine Flüssiglinse keine definierte Oberfläche auf, die eine optische Rechnung abgestimmt werden kann, und zum anderen verändert eine Flüssiglinse ihre eigene Brennweite, was die Gesamtvergrößerung des optischen Systems verändert. Da in der Mikroskopie höchste Anforderungen an die optische Qualität gestellt werden, wird diese Technologie bisher nicht in bekannten Mikroskopen bzw. entsprechenden Systemen eingesetzt. Hauptanwendungen dieser Technologie sind: Qualitätskontrolle von Elektronikbaugruppen (beispielsweise LCDs, PCBs, ICs und CCMs), Kontrolle und/oder Sortierung von (Glas- und Kunststoff-)Flaschen, Paketen etc., Identifizieren von Barcodes etc.

Die Flüssiglinse 52 kann in allen Bauformen unmittelbar oder mit einem (kleinen) Abstand hinter dem Objektiv 20 angeordnet sein. Eine derartige Anordnung der Flüssiglinse im Strahlengang hinter dem Objektiv ohne ein weiteres dazwischenliegendes Element ermöglicht es, die vorher genannte Verschlechterung der optischen Qualität zu minimieren. Ferner arbeitet das Bildgebungsmodul 100, 200, 300 rein digital. Die Auflösung der verwendeten Kamera 20 stellt selbst eine Grenze der optischen Qualität dar, so dass die optischen Anforderungen nicht so hoch sind wie beispielsweise bei der Verwendung eines Okulars. Durch die hier beschriebene Verwendung im Bildgebungsmodul 100, 200, 300 werden die optischen Nachteile einer Flüssiglinse vernachlässigbar. Vorzugsweise ist die Flüssiglinse 52 eine formveränderliche Linse, basierend auf einer Kombination von optischen Fluiden und einer Polymermembran. Das Kernelement besteht aus einem Behälter, welcher mit einer optischen Flüssigkeit gefüllt ist und mit einer dünnen, elastischen Polymermembran abgedichtet ist. Ein (beispielsweise kreisförmiger, wobei andere Formen wie (teil-)elliptisch möglich sind) Ring, der mechanisch auf die Membran drückt, formt die abstimmbare Linse. Diese mechanische Verformung wird durch Anlegen einer Spannung an den Ring erreicht. Die Flüssiglinse 52 hat eine feste Vergrößerung und kann alleine, d.h. ohne eine weitere z.B. mechanische Fokusanordnung, zur Fokussierung verwendet werden, so dass die Fokussierung (insbesondere Autofokus) im optischen Pfad lediglich bzw. ausschließlich durch die Flüssiglinse 52 erreicht wird. Eine derartige mechanische Fokussierung der Flüssiglinse ist genauer als beispielsweise eine rein elektromagnetische Fokussierung einer Flüssiglinse. Da für Zwecke der Mikroskopie hohe Toleranzen im Fokus notwendig sind, ist die beschriebene Flüssiglinse einer rein elektromagnetischen Fokussierung überlegen und kann eine verbesserte wiederholbare Qualität der Bildgebung ermöglichen.

Die Linse 56 ist vorzugsweise eine Tubuslinse, d.h. mehrere Linsen, beispielsweise ein Linsenpaar (Achromat), das ein durch das Objektiv nach unendlich abgebildete Objekt auf den Kamerasensor abbildet. Die Tubuslinse erzeugt ein reelles Bild auf der Kamera. Vorzugsweise hat die Tubuslinse eine Brennweite von 200 mm, es ist aber auch möglich, geringere oder längere Brennweiten, vorzugsweise jedoch geringere Brennweiten, zu verwenden, um bei hohem Auflösungsvermögen große Bildfelder abzubilden. Durch eine hier verwendete Anordnung mit einem parallelen Strahlengang kann man Lichtstrahlen (weiterer) potenzieller Lichtquellen zur Beleuchtung problemlos in den Strahlengang einkoppeln. Auch die Korrekturmöglichkeiten für optische Fehler sind in einem solchen Aufbau vielfältig.

Das Emissionsfilter 58 filtert den Anregungsbereich eines angeregten Fluorophors im zu untersuchenden Objekt heraus, während es den Emissionsbereich durchlässt.

Das Objektiv 20 ist ein sogenanntes unendliches Objektiv, zu denen auch eine Tubuslinse gehört. Dies ermöglicht es, die Fluoreszenzbeleuchtung in den Strahlengang einzukoppeln. Solch ein Objektiv hat typischerweise einen speziellen Arbeitsabstand und eine spezielle Apertur, welche die Auflösung definiert. Vorzugsweise hat das Objektiv eine Vergrößerung von 0,5-fach, 5-fach, 10-fach, 20-fach, 40-fach oder bis hin zu 100-fach. Die Vergrößerung kann entsprechend voreingestellte Werte aufweisen und/oder stufenlos regelbar sein und jeden Wert zwischen 0,5-fach bis hin zu 100-fach annehmen. Das Objektiv 20 ragt vorzugsweise aus dem Gehäuse 40 heraus, um die Größe des Gehäuses 40 zu minimieren.

Die Kamera 30 ist eine Digitalkamera (Machine Vision Camera), die einen CMOS-Sensor und eine entsprechende Treiberplatine sowie eine Steckerplatine beinhaltet. Die Kameras werden in einer anwendungsspezifischen Ausführung konfiguriert. Die Größe des Sensors in Megapixel (MP) beträgt vorzugsweise im Wesentlichen 1,27 MP, 1,7 MP, 2 MP, 2,07 MP, 2,13 MP, 3,1 MP, 5 MP, 12,3 MP, 20,48 MP, 32 MP, 48 MP, 50 MP oder 61 MP. Je nach Ausführung und Anwendung des Sensors wird eine entsprechende Steckerausführung bzw. ein digitales Transferprotokoll (beispielsweise USB 2.0, USB 3.0, USB 3.1, GigE, 10GigE, Cameralink) definiert. Die (oder mindestens eine) Kamera wird immer im Gehäuse verbaut und ist somit ein integraler Bestandteil des Imaging Moduls.

In Figur 1 wird die Beleuchtung durch einen im Wesentlichen geraden ersten Strahlengang von der LED 11a durch das Objektiv 20 und/oder über eine Umlenkung mittels des linken Dichroit 14a von der LED 11b durch das Objektiv 20 erzielt. Die Kamera 30 ist in einem zweiten Strahlengang parallel zum ersten Strahlengang angeordnet, der über den Umlenkspiegel 54 und das rechte Dichroit 14b in den ersten Strahlengang zum Objektiv 20 mündet.

Alle Komponenten innerhalb des Gehäuses sind miteinander für eine optimale Lichtleitung kalibriert und mechanisch unveränderlich in dem Gehäuse 40 angebracht. Lediglich die Emission der LEDs 11 und der Fokus der Flüssiglinse 52 sowie die Kameraparameter können digital verändert werden. Zu diesem Zweck sind zwei Treiberschaltungen sowie die Treiberplatine der Kamera vorgesehen. Ein Flüssiglinsentreiber 62 steuert die Flüssiglinse 52 und ein LED-Treiber 64 steuert die LEDs 11. Die Kommunikation des Bildgebungsmoduls 100 wird über den externen Anschluss 49 ermöglicht.

Der Flüssiglinsentreiber 62 ermöglicht es, die Strom- und Spannungsversorgung der Flüssiglinse 52 zu regeln, um die Linse einzustellen und dient als Kommunikationsschnittstelle zur Ansteuersoftware.

Der LED-Treiber 64 steuert beispielsweise Pulssignale, um die Intensität der LED zu regeln und dient als Kommunikationsschnittstelle zur Ansteuersoftware. Der Treiber regelt auch die entsprechende Strom-Spannungsversorgung, die über eine einheitliche Schnittstelle nach außen geführt wird und über die Ansteuersoftware geregelt wird.

Der externe Anschluss 49 ist vorzugsweise eine Einkabellösung über eine spezifische Steckeranordnung, beispielsweise mit einer USB-Schnittstelle, um sofort einsetzbar zu sein (Plug-and-Play). Allerdings können die Module auch mit anderen Schnittstellen realisiert werden, beispielsweise mit mehr als einem Anschluss, um die Auslesung der Daten und die Stromversorgung getrennt und störungsfrei zu realisieren. Dazu käme jeweils ein Anschluss für die Kamerasignale, ein weiterer Anschluss für die Ansteuerung der Flüssiglinse und noch ein weiterer Anschluss, um die Energieversorgung zu gewährleisten, oder eine Kombination davon. Der oder die Stecker 49 sind sichtbar und ermöglichen eine Verbindung zu einem externen Computer.

Es ist möglich, das Bildgebungsmodul 100, 200, 300 als allein operierendes Produkt (standalone) in einem eingebetteten System (embedded system) zu verwenden. Dazu weist das Modul ferner eine integrierte Verarbeitungs-Schaltung (mit Prozessor) auf, auf der eine Software zur Steuerung des Moduls läuft. Über die Schnittstelle 49 kann damit bereits eine fertige Bedienoberfläche und verarbeitete Messdaten geliefert werden. Alternativ kann die Software auf einem externen Computer laufen, die das Modul über die Schnittstelle 49 steuert und Messdaten erhält. Das Gehäuse 40 kann ferner eine digitale Grafikeinheit aufweisen, die eingerichtet ist, Daten, die von der Kamera 30 aufgenommen wurden, zu verarbeiten und direkt an ein Endgerät, vorzugsweise einen Bildschirm oder eine virtuelle Datenbank (Cloud Lösung), auszugeben. Ferner kann das Gehäuse 40 eine Prozessoreinheit aufweisen, die eingerichtet ist, Daten, die von der Kamera 30 aufgenommen wurden, zu verarbeiten und verschiedene Fokussierungen der Flüssiglinse 52 zu veranlassen, um Bilder mehrerer Schichten eines untersuchten Objekts zu erzeugen und basierend auf den Bildern ein 3D Modell des Objekts zu erzeugen.

In jedem Fall sind alle Komponenten innerhalb des Moduls aufeinander abgestimmt. Die Module werden nach Anwendungsspezifischen Vorgaben montiert, feinjustiert und dann mechanisch fixiert, damit die vielen Einzelkomponenten sich nicht mehr verändern können (Endjustierung). Danach wird die fixe optische Vergrößerung des Moduls mit einem zertifizierten Kalibriermaßstab vermessen und die Kamera und Software darauf einkalibriert. Ein Pixelabstand auf der Kamera entspricht dann genau einem voreingestellten Längenmaß. Somit kann in einem mit dem Modul aufgenommenen Bild mittels einer entsprechenden Software (oder genauer Auslesung der Kameraparameter) ein Objekt vermessen werden, ohne eine weitere Kalibrierung (vor der eigentlichen Messanwendung) vorzunehmen. Der Bediener könnte jederzeit selbst eine solche weitere eigene Kalibrierung aufspielen, das ist aber für die vorliegende Erfindung nicht notwendig. Bei standardisierten Mikroskopen muss bei jeder Änderung der Objektive oder Kamera vor einer Vermessung die Kamera zum Objekt aufwändig kalibriert werden. Dieser Schritt entfällt bei dem kompakten Bildgebungsmodul 100, 200, 300, da diese mit festen Komponentenparametern vorkalibriert sind. Die Erstkalibrierung aller optischen Komponenten erfolgt nach einem vorgeschriebenen Testprotokoll und einem digitalen Abnahmetest, der eine bestimmte Referenzplatte bzw. Auflösungsplatte (beispielsweise eine gewünschte Auflösung definierende Platte) vermisst, Verzeichnungen dokumentiert und alle weiter optischen Parameter erfasst, um sie dann in einem Modul-spezifischen File zu speichern, damit jedes Modul komplett identische Funktionalitäten aufweist. Vor allem die Beleuchtung weist bereits (vom Hersteller definierte) Toleranzen in der Wellenlänge auf. Auch die verwendeten Kameras weisen bereits bei Ihrer Herstellung Intensitätsunterschiede auf. Durch die definierte Kalibrierung aller Komponenten im fertigen Modul kann die Kalibrierung im jeweiligen Modul (on board) gespeichert und bei der Bildausgabe berücksichtigt werden, um eine wiederholbare und zwischen gleichen Modulen gleichbleibende Bildaufnahme zu garantieren. Insbesondere für KI-Anwendungen ist es unerlässlich, dass die Bildaufnahme immer und überall mit gleicher Qualität wiederholbar abläuft. Hierbei zählt die Wiederholbarkeit der Aufnahme mehr als eine etwaige "beste" Qualität des Bildes.

Die Kombination aus vorkalibrierten, standardisierten Komponenten, und zwar kompakt und integriert in einem beweglichen Gehäuse, ermöglicht eine modulare, sofortige Verwendung des Bildgebungsmoduls (Plug-and-Play) bei gleichzeitig verlässlichen und vergleichbaren Daten in verschiedensten Systemen (beispielsweise Inkubatoren, Analysegeräten, Messmaschinen) sowohl für Einzelaufnahmen als auch für Live-(Video-)Aufnahmen. Die resultierende Standardisierung der Daten bietet die notwendige Datenkonsistenz, um Anwendungen mit künstlicher Intelligenz (Artificial Intelligence) zu unterstützen.

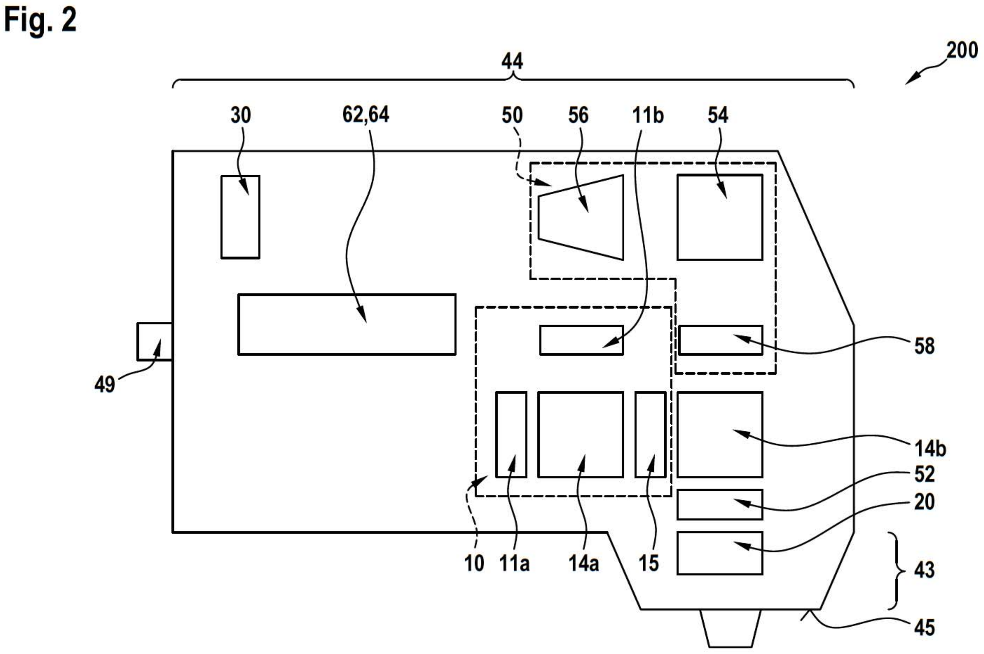

Figur 2 zeigt eine schematische, perspektivische Ansicht eines Bildgebungsmoduls 200. Das Gehäuse 40 weist einen Querschnitt mit einer L-Form auf. Diese Modul-Art wird im folgenden auch "*compact*" genannt. Der L-förmige Querschnitt wird durch einen kurzen Schenkel 43 und einen langen Schenkel 44 (länger als der kurze Schenkel) gebildet. Die Figur 2 zeigt eine leichte Abschrägung des Gehäusequerschnitts in der rechten oberen Ecke, um zu verdeutlichen, dass auch leichte Abweichungen von der Form möglich sind. Auch Rundungen anstatt gerader Kanten sind möglich.

Das Bildgebungsmodul 200 weist die gleichen Komponenten auf wie das Bildgebungsmodul 100, lediglich in einer leicht veränderten Anordnung. Das Objektiv 20 ist am Ende bzw. einer Kopfseite 45 des kurzen Schenkels 43, vorzugsweise mittig an der Kopfseite 45, angeordnet. Dadurch wird die rechte obere Ecke des Gehäuses 40 für den Strahlengang optimal ausgenutzt.

In Figur 2 wird die Beleuchtung durch einen ersten Strahlengang von der LED 11a bzw. über eine Umlenkung mittels des linken Dichroit 14a von der LED 11b durch das Anregungsfilter 15, umgelenkt durch das rechte Dichroit 14b, durch die Flüssiglinse 52 und schlussendlich durch das Objektiv 20 erzielt. Die Kamera 30 ist in einem zweiten Strahlengang parallel zum ersten Strahlengang angeordnet, der durch die Tubuslinse 56, über den Umlenkspiegel 54 und das Emissionsfilter 58 in das rechte Dichroit 14b in den ersten Strahlengang zum Objektiv 20 mündet.

Die Lichtquelle beleuchtet ein zu untersuchendes Objekt in beiden Bildgebungsmodulen 100 und 200 als eine Auflicht-Beleuchtungsvorrichtung von der gleichen Seite wie das Objektiv 20 dieses Objekt betrachtet.

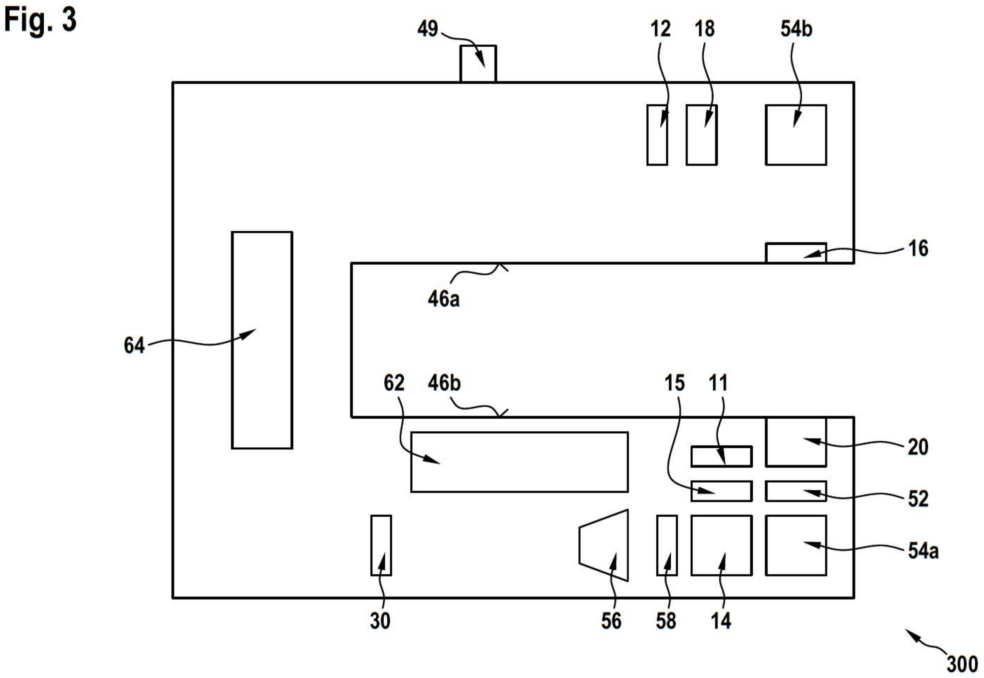

Figur 3 zeigt eine schematische, perspektivische Ansicht eines Bildgebungsmoduls 300. Das Gehäuse 40 weist einen Querschnitt mit einer U-Form auf. Diese Modul-Art wird im folgenden auch "*profile*" genannt. Der U-förmige Querschnitt weist zwei gegenüberliegende Innenseiten 46 auf zwischen denen eine zu untersuchende Probe platziert werden kann. Ähnlich zu den anderen Gehäuseformen sind leichte Abweichungen von der Form möglich.

Das Bildgebungsmodul 300 enthält teilweise die gleichen Komponenten wie das Bildgebungsmodul 100 oder 200, lediglich in einer leicht veränderten Anordnung. Eine Auflicht-Beleuchtung wird durch einen ersten Strahlengang von der LED 11 durch das Anregungsfilter 15 über eine Umlenkung mittels des Dichroit 14, umgelenkt durch den unteren Umlenkspiegel 54a, durch die Flüssiglinse 52 und schlussendlich durch das Objektiv 20 erzielt. Die Kamera 30 ist in einem zweiten Strahlengang, der durch die Tubuslinse 56 das Emissionsfilter 58 in das Dichroit 14 in den ersten Strahlengang zum Objektiv 20 mündet. Zusätzlich wird eine Durchlicht-Beleuchtung durch einen dritten Strahlengang von der LED 12 durch eine Kondensorlinse 18, umgelenkt durch den oberen Umlenkspiegel 54b und durch ein Kontrastfilter 16, auf das zu untersuchende Objekt erzielt. Licht, das aus diesem Objekt austritt, wird durch das Objektiv 20 bis zur Kamera 30 geleitet.

Genau wie in der *linea* und *compact* Form sind alle Komponenten innerhalb des Gehäuses sind miteinander für eine optimale Lichtleitung kalibriert und unveränderlich in dem Gehäuse 40 angebracht. Lediglich die Emission der LEDs 11, 12 und der Fokus der Flüssiglinse 52, sowie die Kameraparameter können digital verändert werden. Zu diesem Zweck sind wiederum der Flüssiglinsentreiber 62 ein LED-Treiber 64 zum Steuern der LEDs 11, 12 und die Kameraplatine vorgesehen. Die Kommunikation des Bildgebungsmoduls 300 wird über den externen Anschluss 49 ermöglicht.

Die LED 12 dient zur Durchlicht-Beleuchtung eines Objekts, das untersucht werden soll. Insbesondere für biologische Proben muss das Objekt von genau der gegenüberliegenden Seite (koaxial) beleuchtet werden. Diese direkte Beleuchtung wird auch Hellfeld-Durchlicht-Beleuchtung genannt. Diese LED ist meistens eine Weißlicht-LED kann aber auch in verschiedenen Fällen, beispielsweise zur Darstellung von Embryos, als monochrome (einfarbige LED) ausgelegt werden. Eine bevorzugte Wellenlänge der LED beträgt 625 nm (+/-10 nm).

Der LED-Treiber 64 steuert die beiden verwendeten Lichtquellen 11 und 12 im Bildgebungsmodul 300 getrennt an und dient als Kommunikationsschnittstelle zur Ansteuersoftware.

Das Filter 16 ist ein Kontrastfilter. Bei der hier beschriebenen Anwendung der Filter im Durchlicht bei Imaging Modulen handelt es sich um eine reine digitale Anordnung handelt, also ohne Okulareinblick. Der verwendete Sensor (Kamera 30) ist viel lichtempfindlicher als das Auge und kann mit der geringeren Leistungsdichte durch die Streuwirkung gute Kontraste darstellen. Die gerichtete Strahlung ist zwar statistisch verteilt und nicht kollimiert, wie bei üblicherweise in der Biologie verwendete Phasenkontrastverfahren, aber durch die plane Sensorebene ergibt sich ein ausreichender Kontrast bei transparenten Objekten, der für Bildverarbeitungsaufgaben geeignet ist. Der Homogenisierungseffekt des diffraktiven Elementes wird verwendet, um einen Phasenunterschied an biologischen Proben zu erzeugen.

Kontrastfilter werden in der industriellen Automatisierung und Robotik eingesetzt, um für Bildverarbeitungsaufgaben eine homogene und reflexfreie Beleuchtung zu gewährleisten. In Laseranwendungen werden diese Elemente oft zur Erzeugung gleichmäßiger Laserintensitäten in der Bearbeitungsebene bzw. zur Homogenisierung und Formung von Laserstrahlen verwendet. Sie können auch zur Reduzierung von sogenannter Speckles (Hotspots) von Vorteil sein. Jedoch werden derartige Kontrastfilter in der Mikroskopie bisher nicht eingesetzt, da hier die Aperturen (Einrittswinkel) der Beleuchtung, an die Aperturen der verwendeten Mikroobjektive angepasst werden, um eine maximale Intensität und einen maximalen Kontrast zu erzielen. Ein solches diffraktives Element würde jedoch nur einen Bruchteil an Beleuchtungsintensität in das Objektiv bringen. Dies ist jedoch für all jene Anwendungen, bei denen jedes Photon im Objektiv zählt, nachteilig.

Das Filter 16 hat die Funktion einen Phasenkontrast zu erzeugen, der in der Biologie notwendig ist, um transparente Proben sichtbar zu machen. Üblicherweise sind die Beleuchtung und das Objektiv als Kontrasterzeuger im Zusammenspiel aufeinander abgestimmt, beide sind also regelmäßig keine Standardkomponenten. Übliche Verfahren sind das Phasenkontrastverfahren oder das Hoffmannkontrastverfahren, bei denen eine spezielle Spiegeleinheit im Objektiv bzw. in der Beleuchtungsanordnung angebracht sind.

Die Funktion des Filter 16 beruht darauf, dass eingebrachtes Licht (Durchlicht) homogenisiert wird und eine Phasenverschiebung an dichteren Medien (Zellen) erfährt. Die durch das Objekt abgeschwächten Strahlen erzeugen auf der Kamera 30 im Vergleich zu den Originalstrahlen im Verhältnis der Dichte des Objektes eine unterschiedliche Intensität, was digital als Kontrast interpretiert wird. Im Extremfall ist ein undurchsichtiges Objekt nur durch eine Änderung der Dichte sichtbar. Bei bekannten Mikroskopen mit Okularen zum direkten Einblick mit dem Auge sind die Anforderungen an die Kontrastverfahren sehr hoch (teuer, komplex im Aufbau, aufwändig in der Justierung). Da bei der hier beschriebenen Anordnung bereits ein (einziger) CMOS-Sensor als Kamera und/oder als Detektor verwendet wird, können auch weniger komplexe Filterverfahren gleichwertige Effekte erzielen.

Vorzugsweise ist das Filter 16 ein "Opto Contrast Enhancement Filter", ein optisches Element, das Licht einer inhomogenen Lichtquelle, beispielsweise einer LED, homogen verteilt und deren Strahlen ausrichtet. Diese Komponente zeichnet sich durch eine nicht Gauß'sche Intensitätsverteilung aus, die unabhängig von der Lichteinstrahlung ist. Dieses optische Filter 16 kann durch Spritzgussverfahren aus Kunststoff hergestellt werden. Es kann eine Streustruktur beinhalten, die ähnlich einem diffraktiven optischen Element wirkt. Somit wird eine kontrollierte Streuung und Verteilung des Lichts ermöglicht. Ein Vorteil ist, dass einfache Objektive ohne teure Modifikation verwendet werden können und auch die Herstellung der Filter, inklusive Montage und Justierung, ist verhältnismäßig einfach und günstig. Ferner ermöglicht es die Kombination aus dem "Opto Contrast Enhancement Filter" und der Fokussierung, mittels der Flüssiglinse 52 durch ein transparentes Objekt zu fokussieren und in jeder Ebene des Objekts ein Bild aufzunehmen. Die aufgenommenen Bilder können dann nach Auslesen der jeweiligen Position der Ebene zum Erzeugen eines 3-D Volumenmodells verwendet werden.

Die Kondensorlinse 18 ist eine positive Linse oder mehrere Linsen, die eingesetzt werden, um Licht zu sammeln und gleichmäßig auf eine Fläche zu projizieren bzw. zu kollimieren. Die Kondensorlinse 18 erfasst die nicht gerichteten Beleuchtungsstrahlen der LED 12, um eine maximale Lichtausbeute der LED 12 zu bekommen und fokussiert sie in den optischen Aufbau, um optisch korrekt mit dem Abbildungsobjektiv 20 zu funktionieren. Der Beleuchtungsstrahlengang im Durchlicht ist durch den Kondensor 18 optisch definiert und der Abbildungsstrahlengang durch das Objektiv 20 und die Tubuslinse 56 bestimmt. Diese Komponenten müssen genau aufeinander abgestimmt sein, um einen optimalen Kontrast der Probe zu ermöglichen und eine perfekte Abbildung auf die Kamera zu garantieren.

Das Emissionsfilter 58 filtert den Anregungsbereich des angeregten Fluorophors im zu untersuchenden Objekt heraus, während es den Emissionsbereich durchlässt. Genau wie die anderen Filter ist diese Komponente kritisch zur Realisierung des Kontrastverfahren s.

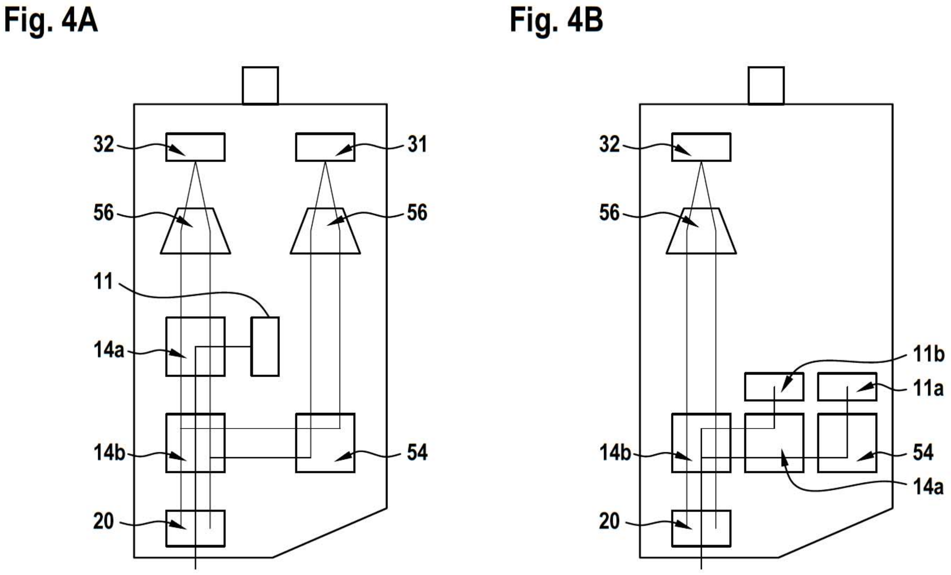

Die genaue Anordnung der Elemente in dem Gehäuse 40 kann in allen Bauformen *linea, compact* und *profile* variieren. Wie in Figuren 4A und 4B beispielhaft für ein linea-Modul illustriert, können auch mehrere Kameras 31, 32 und eine andere Anzahl oder Anordnung von LEDs 11 realisiert werden. Dabei ist das Licht der LED 11 in Figur 4A über ein Dichroit 14 in den Strahlengang einer zweiten Kamera 32 eingegliedert. In Figur 4B wird das Licht zweier LEDs 11a und 11b nacheinander in den Strahlengang eingegliedert. Vorzugsweise können die zwei Tubuslinsen in Figur 4A eine unterschiedliche Brennweite haben um einen unterschiedlichen Abbildungsmaßstab zu erreichen. Dadurch wird ein Zoomsystem implementiert, das zur selben Zeit zwei Vergrößerungen darstellen kann. Angezeigt werden ein Übersichtsbild und ein hoch vergrößertes Mikroskop-Bild von der selben Probe.

Insbesondere die U-Form muss nicht sowohl eine Auflicht-, als auch eine Durchlicht-Beleuchtung aufweisen. Auch nur eine davon kann einzeln realisiert werden.

Weitere Gehäuseformen, wie zum Beispiel eine T-Form, sind möglich. Hier wäre das Objektiv in der Mitte des Ts angeordnet.

Ferner muss eine Auflicht-Beleuchtung nicht zwangsweise durch das Objektiv 20 erfolgen. Separate Beleuchtungsvorrichtungen, die Licht neben dem Objektiv ausstrahlen sind auch denkbar. Allerdings ermöglicht die Beleuchtung durch das Objektiv eine bessere Ausleuchtung eines oder mehrerer zu untersuchender Objekte.

Zum Durchführen einer Mikroskopieanwendung ist neben dem Bildgebungsmodul 100, 200, 300 auch ein Probenträger notwendig, der das zu untersuchende Objekt oder die zu betrachtende Probe an der richtigen Stelle hält, um ein vollständiges Mikroskop zu bilden. Da bei Mikroskopen die Bildfelder und die Schärfentiefe so gering sind, ist es fast immer notwendig, die Probe oder das Mikroskop relativ zueinander in 3 Achsen zu bewegen: X-Y, um verschiedene Objektaspekte zu sehen und Z, um die Probe scharf zu stellen. Oftmals ist es jedoch nicht gewünscht, die Probe zu verfahren, da sich das Objekt sonst verschiebt oder bewegt (beispielsweise bei Objekten in Flüssigkeiten). Standardmikroskope sind zu groß und zu schwer, um sie genau und feinfühlig zu verfahren. Hier liegt ein großer Vorteil der vorliegenden Erfindung, da die beschriebenen Bildgebungsmodule klein und leicht sind und gut an manuellen oder motorischen Achsen oder Tischen befestigt werden können. Die aufgeführte Flüssiglinse 52 macht sogar eine Z-Fokussierung mit einer Achse obsolet, da sich der Fokus durch Spannungsanlegen verändert. Es muss hier keine mechanische Verstellung mehr erfolgen. Das Bildgebungsmodul funktioniert immer als ein einzelner Sensor und die Achsen dienen als Zubehör. Bei Standardmikroskopen sind das Mikroskop und die Verstelleinheiten meistens als eine nicht trennbare Einheit ausgeführt. Dies reduziert die Flexibilität für Integrationsaufbauten oder platz- und gewichtskritische Aufgaben.

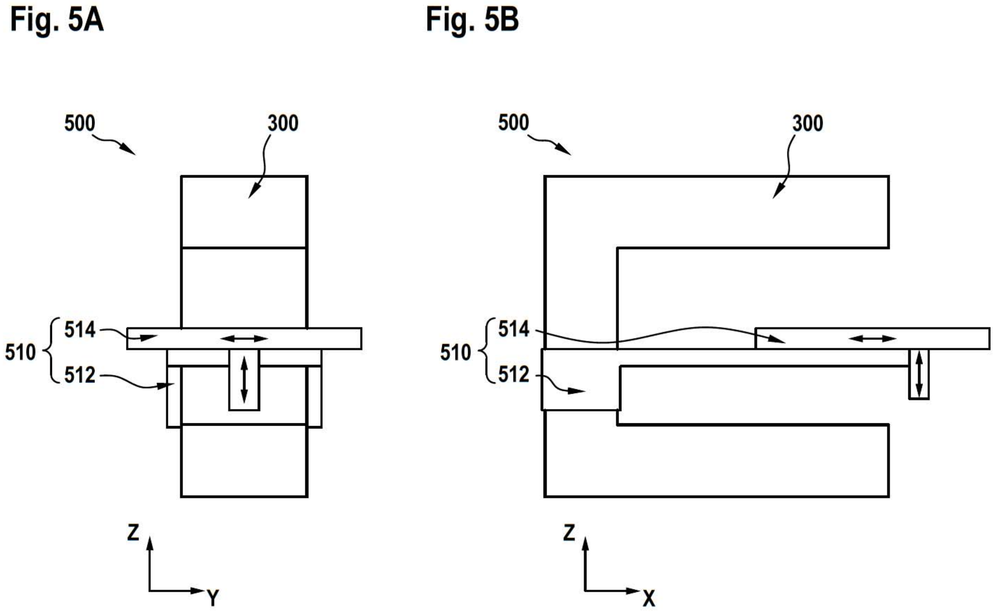

Die Figuren 5A und 5B zeigen ein beispielhaftes System 500 für digitale Mikroskopie, das einen Probenträger 510 und das kompakte Bildgebungsmodul 300 *profile* aufweist. Entweder ist der Probenträger 510 eingerichtet, derart mit dem kompakten Bildgebungsmodul 300 integriert zu werden, dass das kompakte Bildgebungsmodul 300 bzw. die Optik des Moduls auf ein zu untersuchendes Objekt ausgerichtet ist, oder der Probenträger 510 wird als Teil des Moduls verstanden, so dass das kompakte Bildgebungsmodul 300 eingerichtet ist, derart mit dem Probenträger 510 integriert zu werden, dass das kompakte Bildgebungsmodul 300 bzw. die Optik des Moduls auf ein zu untersuchendes Objekt ausgerichtet ist. Der Probenträger 510 ist vorzugsweise eingerichtet, das Objekt bezüglich des Bildgebungsmoduls 300 manuell oder motorisiert in X-, Y- und/oder Z-Richtung zu bewegen. Dabei wird das Bildgebungsmodul 300 selbst nicht bewegt. Der dargestellte Probenträger 510 weist eine längliche Trägerkonstruktion 512 zwischen den zwei gegenüberliegenden Innenseiten des Bildgebungsmoduls 300 auf, auf der eine Aufnahme 514 für die Probe in X-, Y- und Z-Richtung verfahren werden kann.

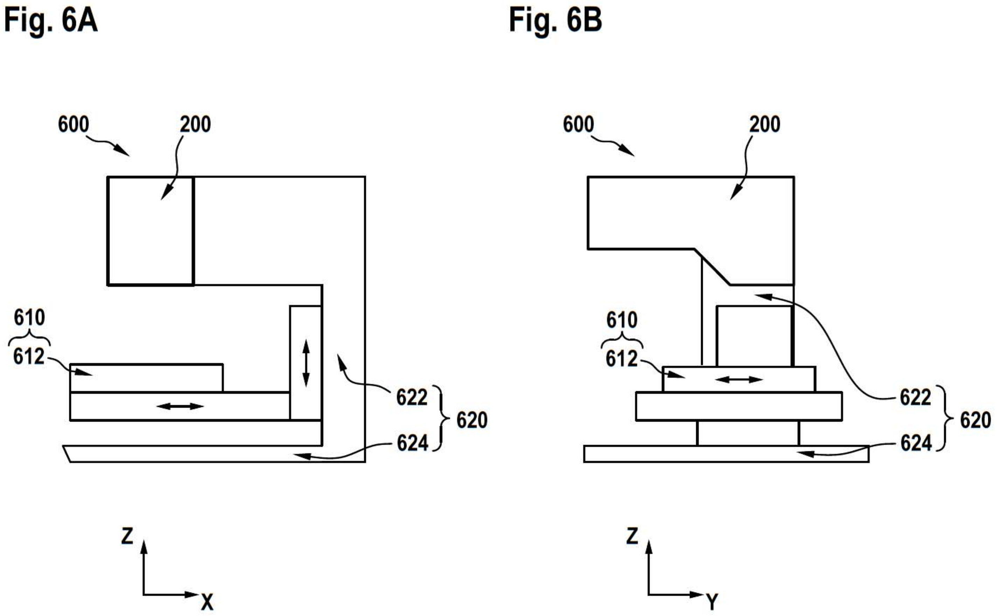

Die Figuren 6A und 6B zeigen ein weiteres beispielhaftes System 600 für digitale Mikroskopie, das einen Probenträger 610, eine Modul-Trägervorrichtung 620 und das kompakte Bildgebungsmodul 200 *compact* aufweist. Analog kann das kompakte Bildgebungsmodul 100 in dem System 600 integriert werden. Die Modul-Trägervorrichtung 620 ist eingerichtet, das kompakte Bildgebungsmodul 200 derart zu integrieren, dass es bzw. die Optik des Moduls auf ein zu untersuchendes Objekt, vorzugsweise in Relation zu dem Probenträger 610, ausgerichtet ist. Der Probenträger 610 ist vorzugsweise eingerichtet, das Objekt bezüglich des Bildgebungsmoduls 200 manuell oder motorisiert in X-, Y- und/oder Z-Richtung zu bewegen. Dabei wird das Bildgebungsmodul 200 selbst nicht bewegt. Die dargestellte Modul-Trägervorrichtung 620 besteht aus einem Arm 622, der das Bildgebungsmodul 200 oberhalb der zu untersuchenden Probe hält und einer Grundplatte 624, an der der Arm befestigt ist. Der dargestellte Probenträger 610 ist an dem Arm 622 der Modul-Trägervorrichtung 620 unterhalb des Bildgebungsmoduls 200 befestigt und kann eine Aufnahme 612 für die Probe in X-, Y- und Z-Richtung verfahren.

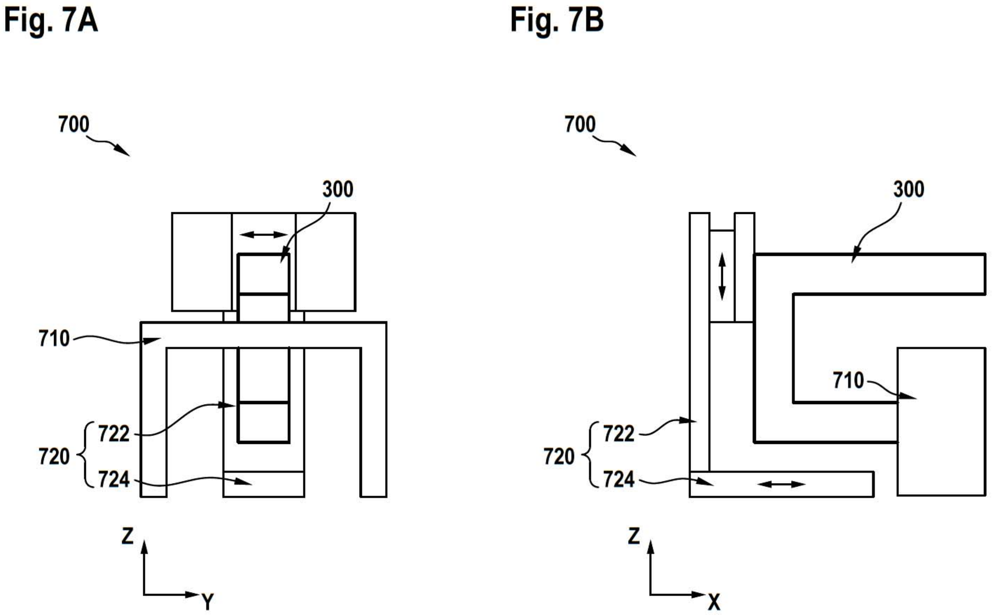

Die Figuren 7A und 7B zeigen ein beispielhaftes System 700 für digitale Mikroskopie, das einen Probenträger 710, eine Modul-Trägervorrichtung 720 und das kompakte Bildgebungsmodul 300 *profile* aufweist. Die Modul-Trägervorrichtung 720 ist eingerichtet, das kompakte Bildgebungsmodul 300 derart zu integrieren, dass es bzw. die Optik des Moduls auf ein zu untersuchendes Objekt, vorzugsweise in Relation zu dem Probenträger 710, ausgerichtet ist. Die Modul-Trägervorrichtung 720 ist vorzugsweise eingerichtet, das Bildgebungsmodul 300 bezüglich des Objekts manuell oder motorisiert in X-, Y- und/oder Z-Richtung zu bewegen. Dabei wird das Objekt selbst nicht bewegt. Die dargestellte Modul-Trägervorrichtung 720 besteht aus einem Arm 722, an dem das Bildgebungsmodul 300 in Y- und Z-Richtung verfahren werden kann, und einer Grundplatte 724, an der der Arm 722 derart befestigt ist, dass der Arm 722 mit dem Bildgebungsmodul 300 in X-Richtung verfahren werden kann. Der dargestellte Probenträger 710 entspricht einem beispielhaften Tisch, der die Probe hält.

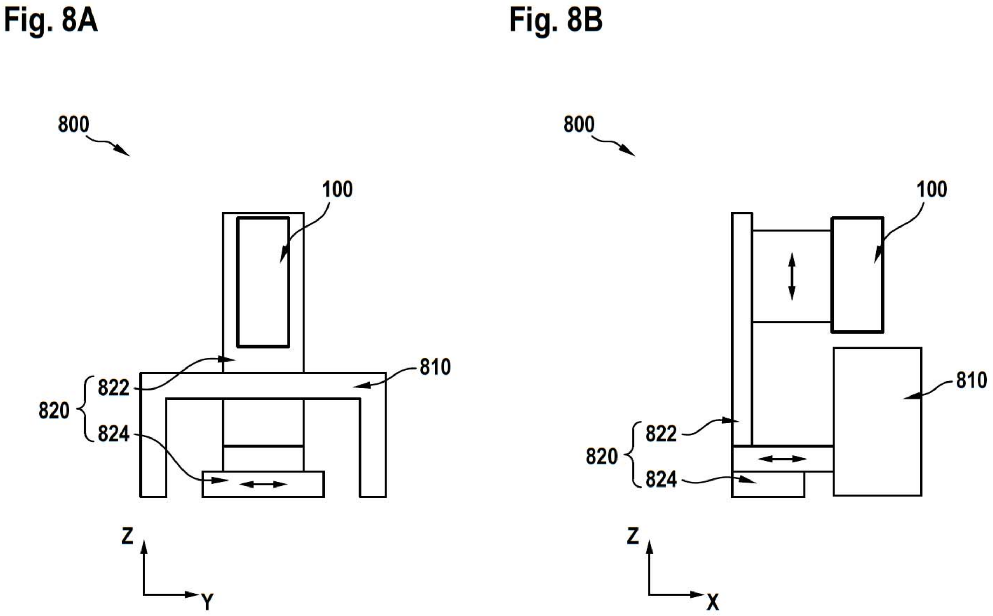

Die Figuren 8A und 8B zeigen ein weiteres beispielhaftes System 800 für digitale Mikroskopie, das einen Probenträger 810, eine Modul-Trägervorrichtung 820 und das kompakte Bildgebungsmodul 100 *linea* aufweist. Analog kann das kompakte Bildgebungsmodul 200 in dem System800 integriert werden. Die Modul-Trägervorrichtung 820 ist eingerichtet, das kompakte Bildgebungsmodul 100 derart zu integrieren, dass es bzw. die Optik des Moduls auf ein zu untersuchendes Objekt, vorzugsweise in Relation zu dem Probenträger 810, ausgerichtet ist. Die Modul-Trägervorrichtung 820 ist vorzugsweise eingerichtet, das Bildgebungsmodul 100 bezüglich des Objekts manuell oder motorisiert in X-, Y- und/oder Z-Richtung zu bewegen. Dabei wird das Objekt selbst nicht bewegt. Die dargestellte Modul-Trägervorrichtung 820 besteht aus einem Arm 822, an dem das Bildgebungsmodul 100 in Z-Richtung verfahren werden kann, und einer Grundplatte 824, an der der Arm 822 derart befestigt ist, dass der Arm 822 mit dem Bildgebungsmodul 100 in X-, und Y-Richtung verfahren werden kann. Der dargestellte Probenträger 810 entspricht einem beispielhaften Tisch, der die Probe hält.

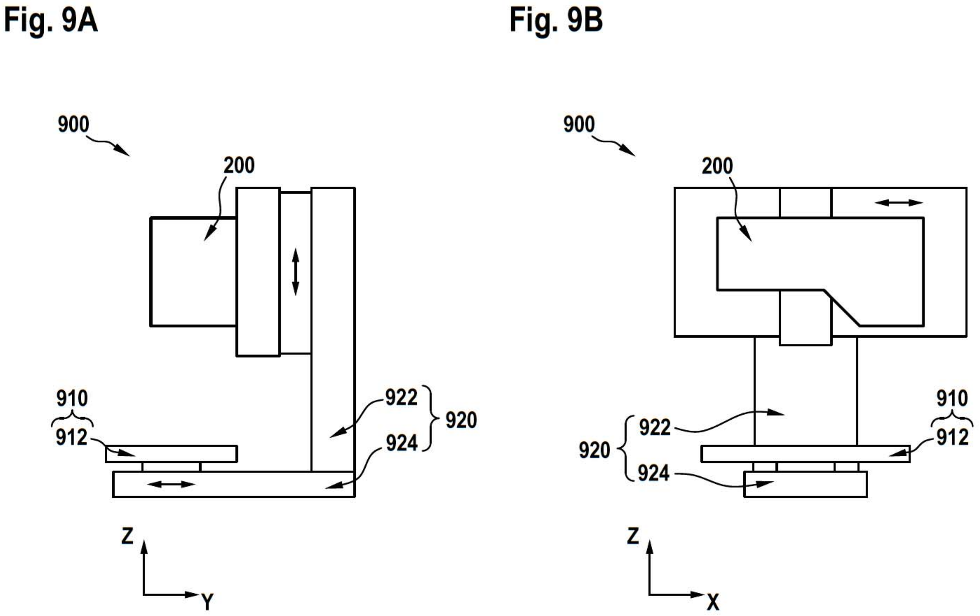

Figur 9 zeigt ein weiteres beispielhaftes System 900 für digitale Mikroskopie, das einen Probenträger 910, eine Modul-Trägervorrichtung 920 und das kompakte Bildgebungsmodul *200 compact* aufweist. Analog kann das kompakte Bildgebungsmodul 200 in dem System 900 integriert werden. Die Modul-Trägervorrichtung 920 ist eingerichtet, das kompakte Bildgebungsmodul 200 derart zu integrieren, dass es bzw. die Optik des Moduls auf ein zu untersuchendes Objekt, vorzugsweise in Relation zu dem Probenträger 910, ausgerichtet ist. Die Modul-Trägervorrichtung 920 ist vorzugsweise eingerichtet, das Bildgebungsmodul 200 bezüglich des Objekts manuell oder motorisiert in X- und/oder Z-Richtung zu bewegen. Der Probenträger 910 ist vorzugsweise eingerichtet, das Objekt bezüglich des Bildgebungsmoduls 200 manuell oder motorisiert in Y-Richtung zu bewegen. Die dargestellte Modul-Trägervorrichtung 920 besteht aus einem Arm 922, an dem das Bildgebungsmodul 200 in X, und Z-Richtung verfahren werden kann, und einer Grundplatte 924, an der der Arm 922 befestigt ist. Der dargestellte Probenträger 910 ist auf der Grundplatte 924 der Modul-Trägervorrichtung 920 unterhalb des Bildgebungsmodul 200 befestigt und kann eine Aufnahme 912 für die Probe in Y-Richtung verfahren.

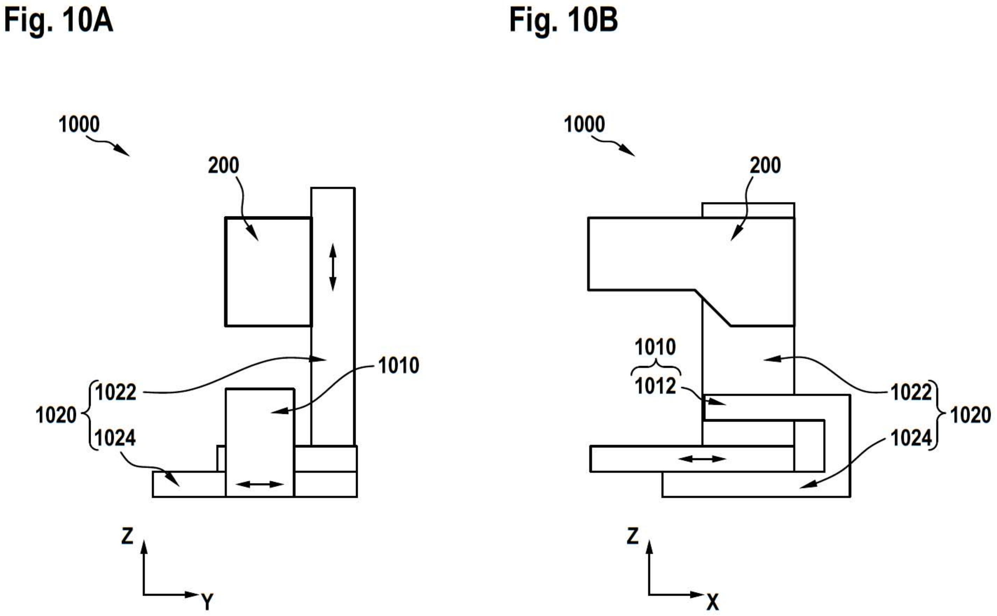

Figur 10 zeigt ein weiteres beispielhaftes System 1000 für digitale Mikroskopie, das einen Probenträger 1010, eine Modul-Trägervorrichtung 1020 und das kompakte Bildgebungsmodul 200 *compact* aufweist. Analog kann das kompakte Bildgebungsmodul 200 in dem System 1000 integriert werden. Die Modul-Trägervorrichtung 1020 ist eingerichtet, das kompakte Bildgebungsmodul 200 derart zu integrieren, dass es bzw. die Optik des Moduls auf ein zu untersuchendes Objekt, vorzugsweise in Relation zu dem Probenträger 1010, ausgerichtet ist. Die Modul-Trägervorrichtung 1020 ist vorzugsweise eingerichtet, das Bildgebungsmodul 200 bezüglich des Objekts manuell oder motorisiert in X- und/oder Z-Richtung zu bewegen. Der Probenträger 1010 ist vorzugsweise eingerichtet, das Objekt bezüglich des Bildgebungsmoduls 200 manuell oder motorisiert in Y-Richtung zu bewegen. Die dargestellte Modul-Trägervorrichtung 1020 besteht aus einem Arm 1022, an dem das Bildgebungsmodul 200 in Z-Richtung verfahren werden kann, und einer Grundplatte 1024, an der der Arm 1022 derart befestigt ist, dass der Arm 1022 mit dem Bildgebungsmodul 200 in X-Richtung verfahren werden kann. Der dargestellte Probenträger 1010 ist L-förmig und ist seitlich an der Grundplatte 1024 der Modul-Trägervorrichtung 1020 befestigt und kann eine Aufnahme 1012 für die Probe unterhalb des Bildgebungsmodul 200 in Y-Richtung entlang der Grundplatte 1024 verfahren.

Die Figuren 5-10 zeigen verschiedene Variationen wie die Bildgebungsmodule 100, 200 und 300 in Systeme mit Probenhalterung und/oder Modul-Trägervorrichtung kombiniert werden können. Die dargestellten Variationen sind lediglich beispielhaft und nicht abschließend, so dass Aspekte aus den verschiedenen Variationen problemlos kombiniert werden können. Insbesondere kann die Bewegung der Probe und/oder des jeweiligen Bildgebungsmoduls in jeder Richtung erfolgen.

Die Integration eines Bildgebungsmoduls in ein Mikroskopiesystem verwendet das Bildgebungsmodul als einen einzelnen Sensor, der Datenkonsistenz und Standardisierung der Daten garantiert.

Automatisierte Mikroskop-Verfahren von motorisierten X-Y-Z Probenträgern bzw. Mikroskop Verschiebeachsen Verwenden eine Ansteuersoftware (beispielsweise die OptoViewer Software), um die Achsen entsprechend der Aufgabe anzusteuern und die Bilder entsprechend auszuwählen. Da die komplette Abfolge der Versuche oder der Probenuntersuchungen automatisch, d.h. ohne aktive menschliche Interaktion, erfolgen kann, kann um das Bildgebungsmodul und die Achsen ein weiteres Gehäuse herum konstruiert werden, in dem auch ein Computer oder eine Stromversorgung oder auch ein integrierter Bildschirm untergebracht werden.

Ein automatisiertes Mikroskop-Verfahren stellt bereits eine spezifische Lösung (solution) eines Problems dar. Im Gegensatz dazu ermöglicht ein Bildgebungsmodul 100, 200, 300 (enabler) lediglich ein solches automatisiertes Mikroskop-Verfahren zu implementieren. Damit gilt: "Imaging Modules are enablers not solutions".

Um ein Bildgebungsmodul 100, 200, 300 in ein entsprechendes System 500, 600 für digitale Mikroskopie zu integrieren, weist ein Verfahren 1100 die folgenden Schritte auf:
Zunächst erfolgt ein einmaliges Erst-Kalibrieren 1102 der Komponenten des kompakten Bildgebungsmoduls 100, 200, 300 untereinander. Das Modul ist bereits endjustiert, d.h. alle Komponenten innerhalb des Moduls sind aufeinander abgestimmt/feinjustiert und fixiert, damit sich die vielen Einzelkomponenten und/oder deren relativen Positionen zueinander nicht mehr verändern können. Das Erst-Kalibrieren 1102 bezeichnet Kalibrieren der Kamera 30 und Software auf die optische Vergrößerung, die mit einem zertifizierten Kalibriermaßstab vermessen wurde. Die Zertifizierung erfolgt vorzugsweise gemäß dem DKD (Deutscher Kalibrierdienst)-Kalibrierschein und dient als Nachweis der Rückführbarkeit gemäß ISO 17025 und ISO 9001. Das einmalige Erst-Kalibrieren 1102 erfolgt vorzugsweise werksseitig und ermöglicht eine unmittelbare Verwendung des bereits endjustierten Moduls. Das Erst-Kalibrieren der optischen Komponenten erfolgt nach der oben beschriebenen Norm, so dass alle optischen Parameter erfasst und dann Modul-spezifisch gespeichert werden, damit jedes Modul komplett identische Funktionalitäten aufweist. Vor allem die Beleuchtung weist bereits (beispielsweise vom Hersteller definierte) Toleranzen in der Wellenlänge auf. Auch die verwendeten Kameras weisen schon bei Ihrer Herstellung Intensitätsunterschiede auf. Durch die vordefinierte Kalibrierung aller Komponenten im fertigen Modul kann die Kalibrierung im jeweiligen Modul (on board) gespeichert und bei der Bildausgabe berücksichtigt werden, um eine wiederholbare und zwischen gleichen Modulen gleichbleibende Bildaufnahme zu garantieren. Insbesondere für Kl-Anwendungen ist es unerlässlich, dass die Bildaufnahme immer und überall mit gleicher Qualität wiederholbar abläuft. Hierbei zählt die Wiederholbarkeit der Aufnahme mehr als eine etwaig "beste" Qualität des Bildes.

Ein reversibles Integrieren 1104 des kompakten Bildgebungsmoduls 100, 200, 300 in ein System 500, 600 erfolgt nach dem Erst-Kalibrieren 1102. Dabei kann das Modul mit Schrauben oder anderen geeigneten Befestigungsmitteln in der Trägervorrichtung 620 befestigt werden. Alternativ kann ein Probenträger 510 an dem Bildgebungsmodul 300 befestigt werden, beispielsweise mittels wenigstens einer Schraubverbindung oder anderen geeigneten Befestigungsmitteln.

Vorzugsweise ist nach dem Erst-Kalibrieren 1102 und/oder nach dem Integrieren 1104 keine weitere Kalibrierung der Komponenten des kompakten Bildgebungsmoduls 100, 200, 300 mehr notwendig, da die Erst-Kalibrierung 1102 bereits eine Inbetriebnahme ermöglicht.

Das reversible Integrieren 1104 beinhaltet vorzugsweise auch ein Anschließen des kompakten Bildgebungsmoduls 100, 200, 300 über den (wenigstens einen) externen Anschluss 49, beispielsweise an einen Computer oder ein Bildwiedergabegerät (Bildschirm, stationär oder mobil).

Um das Modul in Betrieb zu nehmen, wird vorzugsweise ein Verbindungskabel vom Modul zum Computer verbunden (USB/GiGE). Auch eine Stromversorgung zum Modul kann über ein Kabel hergestellt werden. Eine Ansteuersoftware (beispielsweise die OptoViewer Software) kann direkt von dem Modul (oder aus einer externen Quelle) geladen und installiert werden. Vorzugsweise erkennt die Ansteuersoftware das Modul automatisch, startet ein Livebild und kann vollumfänglich verwendet werden.

Viele spezifische Einstellungen sind (im Gegensatz zu Standardmikroskopen) nicht notwendig. Hierzu zählen unter anderem die Einstellung der Okulare auf die Augenkorrektur, die Versorgung des Mikroskops mit der einsprechenden Stromversorgung, die Einstellung der Beleuchtungsblenden (Apertur - Sehfeldblende) auf das verwendete Objektiv, die sehr aufwendige Einstellung der Beleuchtungslichtquelle auf die genaue optische Mitte, das Aufschrauben einer Kamera und Berücksichtigung der richtigen Vergrößerungsoptik für die Kamera, da sie nicht mit der Ansicht der Okulare übereinstimmt, das Anschließen der Kamera an den Computer und an die Stromversorgung, das Starten der Kamerasoftware bzw. der Mikroskop Software des Herstellers (oft auch zwei Softwarepakete) oder auch die Durchführung einer Kalibrierung der Vergrößerung, um Messungen durchführen zu können (fällt bei Imaging Modulen weg, da sich die Vergrößerung nicht ändern kann und sie vorkalibriert ausgeliefert werden) - diese Kalibrierung muss für jeden Objektivwechsel durchgeführt werden.

Bei bekannten reinen Digitalmikroskopen gibt es eine Vielzahl an Herstellern, die jeweils andere Kalibrierungsverfahren bzw. Funktionalitäten aufweisen. Die meisten bekannten Hersteller konzentrieren sich jedoch rein auf die Bildgebung. Mit diesen Mikroskopen kann keine Automatisierung durchgeführt werden, da keine (automatisierte) Rückkopplung der Parameter möglich ist.

Das erfindungsgemäße Bildgebungsmodul 100, 200, 300 ermöglicht ferner, Vermessungen in Echtzeit und im Livebild durchzuführen. Dies schließt Videos in verschiedenen Geschwindigkeiten ein, beispielsweise mit sog. Time-Lapse-Funktionalität, bei der je nach Anwendungsfall nur alle paar Sekunden bzw. Minuten ein Bild aufgenommen wird. Dies ist insbesondere bei biologischen Experimenten vorteilhaft, bei denen ein Zeitraum von mehreren Tagen in ein paar Sekunden zusammengefasst werden muss. Vermessungsaufgaben und Bildverarbeitungsaufgaben können spezifisch über eine einzige zentrale Ansteuerungssoftware (beispielsweise OptoViewer Software) ergänzt und durchgeführt werden. Durch die modulare Plattformkonstruktion können mikroskopische Applikationen realisiert werden, die mit Standardgeräten nicht realisiert werden können: beispielsweise mikroskopische Hochgeschwindigkeitsaufnahmen direkt an der Entstehungsquelle (Tropfenentwicklung an Druckern bzw. Dispensern, bildbasierte Durchflusszytometrie etc.), die Analyse biologischer Vorgänge direkt an der Pflanze, in Klimakammern oder direkt am Patienten (Point-of-Care), die Parallelisierung von Massentests in Laboren (aufgrund der kompakten Bauform können parallele Screening Systeme aufgebaut werden, die normalerweise keinen Platz in begrenzten Laboren hätten), oder auch eine mikroskopische Prozess-Überwachung zur beschleunigten Medikamentenentwicklung, bei der die Module in die Herstellungslinien online als Sensoren verbaut werden können.

Die Erfindung wurde anhand bevorzugter Ausführungen beschrieben, wobei die einzelnen Merkmale der beschriebenen Ausführungen frei miteinander kombiniert werden können und/oder ausgetauscht werden können, sofern sie kompatibel sind. Ebenso können einzelne Merkmale der beschriebenen Ausführungen weggelassen werden, sofern sie nicht zwingend notwendig sind. Für den Fachmann sind zahlreiche Abwandlungen und Ausgestaltungen möglich und offensichtlich, ohne dass dadurch der Erfindungsgedanke verlassen wird.

### Bezugszeichenliste

100 *- linea* Modul
200 - *compact* Modul
300 *- profile* Modul
10 - Beleuchtungsvorrichtung
11 - LED Auflicht
12 - LED Durchlicht
14 - Strahlenteiler
15 - Anregungsfilter
16 - Kontrastfilter
18 - Kondensorlinse
20 - Objektiv
30 - Kamera
31 - Sensor 1
32 - Sensor 2
40 - Gehäuse
41 - kurze Seite
42 - lange Seite
43 - kurzer Schenkel
44 - langer Schenkel
45 - Kopfseite
46 - Innenseiten a, b
49 - Anschluss
50 - optische Leitervorrichtung
52 - Flüssiglinse
54 - Umlenkspiegel
56 - Tubuslinse
58 - Emissionsfilter
62 - Treibervorrichtung zur Steuerung der Flüssiglinse
64 - Treibervorrichtung zur Steuerung der LEDs
500 - System mit beweglichem Probenträger und Bildgebungsmodul in profile-Form
510 - Probenträger
512 - Trägerkonstruktion
514 - Aufnahme
600 - System mit beweglichem Probenträger und Bildgebungsmodul in compact-Form
610 - Probenträger
612 - Aufnahme
620 - Modul-Trägervorrichtung
622 - Arm
624 - Grundplatte
700 - System mit beweglicher Modul-Trägervorrichtung und Bildgebungsmodul in *profile-*Form
710 - Probenträger
712 - Aufnahme
720 - Modul-Trägervorrichtung
722 - Arm
724 - Grundplatte
800 - System mit beweglicher Modul-Trägervorrichtung und Bildgebungsmodul in linea-Form
810 - Probenträger
812 - Aufnahme
820 - Modul-Trägervorrichtung
822 - Arm
824 - Grundplatte
900 - System mit beweglichem Probenträger, beweglicher Modul-Trägervorrichtung und Bildgebungsmodul in compact-Form
910 - Probenträger
912 - Aufnahme
920 - Modul-Trägervorrichtung
922 - Arm
924 - Grundplatte
1000 - System mit beweglichem Probenträger, beweglicher Modul-Trägervorrichtung und Bildgebungsmodul in compact-Form
1010 - Probenträger
1012 - Aufnahme
1020 - Modul-Trägervorrichtung
1022 - Arm
1024 - Grundplatte

### Weitere Zusammenfassung der Erfindung

1. Ein kompaktes Bildgebungsmodul (100, 200, 300) für digitale Mikroskopie-Anwendungen, das Folgendes aufweist:
   wenigstens eine Beleuchtungsvorrichtung (10);
   wenigstens ein Objektiv (20);
   wenigstens eine Kamera (30); und
   ein gemeinsames Gehäuse (40), in dem die wenigstens eine Beleuchtungsvorrichtung (10), das wenigstens eine Objektiv (20) und die wenigstens eine Kamera (30) angeordnet sind.
2. Das kompakte Bildgebungsmodul (100, 200, 300) nach 1, das ferner wenigstens eine optische Leitervorrichtung (50) aufweist, die eingerichtet ist, einen einfallenden Lichtstrahl von dem Objektiv (20) zu der wenigstens einen Kamera (30) zu leiten,
   wobei die optische Leitervorrichtung (50) vorzugsweise eine Flüssiglinse (52) zur Fokussierung und besonders bevorzugt eine Treibervorrichtung (60) zur Steuerung der Flüssiglinse (52) aufweist,
   wobei die Fokussierung ausschließlich über die Flüssiglinse erfolgt.
3. Das kompakte Bildgebungsmodul (100, 200, 300) nach 2, wobei die Flüssiglinse (52) direkt hinter dem Objektiv (20) angeordnet ist.
4. Das kompakte Bildgebungsmodul (100, 200, 300) nach einem von 1 bis 3, wobei die optische Leitervorrichtung (50) und/oder die wenigstens eine Beleuchtungsvorrichtung (10) ferner jeweils wenigstens einen Umlenkspiegel (54) und/oder wenigstens einen Strahlenteiler (14) und/oder wenigstens eine Tubuslinse (56) und/oder wenigstens ein Emissionsfilter (58) und/oder wenigstens ein Anregungsfilter (15) aufweist.
5. Das kompakte Bildgebungsmodul (100, 200, 300) nach einem von 1 bis 4, wobei die wenigstens eine Beleuchtungsvorrichtung (10) eine Auflicht-Beleuchtungsvorrichtung aufweist; und
   wobei die Auflicht-Beleuchtungsvorrichtung vorzugsweise wenigstens eine erste Leuchtdiode, LED, (11) aufweist und eingerichtet ist, wenigstens einen ersten Lichtstrahl von der wenigstens einen ersten LED (11) zum Beleuchten eines Objekts durch das Objektiv (20) hindurch zu emittieren.
6. Das kompakte Bildgebungsmodul (100, 200, 300) nach einem von 1 bis 5, wobei das gemeinsame Gehäuse (40) ein Profil mit einer im Wesentlichen rechteckigen Form oder mit einer L-Form hat;
   wobei das Profil in der im Wesentlichen rechteckigen Form wenigstens zwei parallele kurze Seiten (41) und wenigstens zwei parallele lange Seiten (42) aufweist; und
   wobei das Profil in der L-Form einen kurzen Schenkel (43) und einen langen Schenkel (44) aufweist.
7. Das kompakte Bildgebungsmodul (100, 200, 300) nach 6, wobei:
   in der im Wesentlichen rechteckigen Form, das Objektiv (20) entweder an einer der kurzen Seiten (41) angeordnet ist, oder an einem Randbereich einer der langen Seiten (42) in der Nähe einer der kurzen Seiten (41) angeordnet ist.
8. Das kompakte Bildgebungsmodul nach (100, 200, 300) 6, wobei:
   in der L-Form, das Objektiv an einer Kopfseite (45) am Ende des kurzen Schenkels (43) angeordnet ist.
9. Das kompakte Bildgebungsmodul (100, 200, 300) nach einem von 1-5, wobei das gemeinsame Gehäuse (40) ein Profil mit einer U-Form mit zwei gegenüberliegenden Seiten (46) im Inneren der U-Form aufweist; und
   wobei die wenigstens eine Beleuchtungsvorrichtung (10) eine Durchlicht-Beleuchtungsvorrichtung aufweist.
10. Das kompakte Bildgebungsmodul (100, 200, 300) nach 9 in Abhängigkeit von 2, wobei die Durchlicht-Beleuchtungsvorrichtung wenigstens eine zweite Leuchtdiode (12), LED, aufweist und eingerichtet ist, wenigstens einen zweiten Lichtstrahl von einer ersten Seite (46a) der zwei gegenüberliegenden Seiten (46) zum Durchleuchten eines Objekts zum wenigstens einen Objektiv (20) hin zu emittieren;
   wobei vorzugsweise das wenigstens eine Objektiv (20) eingerichtet ist, den ersten Lichtstrahl auf einer zweiten Seite (46b) der zwei gegenüberliegenden Seiten (46) als den einfallenden Lichtstrahl zu empfangen.
11. Das kompakte Bildgebungsmodul (100, 200, 300) nach einem von 9-10, wobei die Durchlicht-Beleuchtungsvorrichtung ein Kontrastfilter (16) aufweist, das eingerichtet ist, Licht einer inhomogenen Lichtquelle homogen zu verteilen und Strahlen auszurichten.
12. Das kompakte Bildgebungsmodul (100, 200, 300) nach einem von 10-12, wobei die Durchlicht-Beleuchtungsvorrichtung ferner wenigstens eine LED-Treibervorrichtung (62) zur Steuerung der
   LEDs (11, 12), wenigstens eine Kondensorlinse (18) und/oder wenigstens einen Umlenkspiegel (54) aufweist.
13. Das kompakte Bildgebungsmodul (100, 200, 300) nach einem von 1 bis 12, wobei das gemeinsame Gehäuse (40) eine Dicke im Wesentlichen im Bereich von 8 mm bis 100 mm, vorzugsweise im Bereich von 8 mm bis 50 mm, vorzugsweise im Bereich von 30 mm bis 50 mm, vorzugsweise 40 mm aufweist; und
   wobei das kompaktes Bildgebungsmodul (100, 200, 300) über einen einzigen externen Anschluss (49) betrieben werden kann.
14. Ein System (500) für digitale Mikroskopie, das Folgendes aufweist:
   einen Probenträger (510); und
   das kompakte Bildgebungsmodul (300) nach einem von 9-12;
   wobei der Probenträger (510) eingerichtet ist, derart mit dem kompakten Bildgebungsmodul (300) integriert zu werden, dass das kompakte Bildgebungsmodul (300) auf ein zu untersuchendes Objekt ausgerichtet ist; oder
   wobei das kompakte Bildgebungsmodul (300) eingerichtet ist, derart mit dem Probenträger (510) integriert zu werden, dass das kompakte Bildgebungsmodul (300) auf ein zu untersuchendes Objekt ausgerichtet ist.
15. Ein System (600, 700, 800, 900, 1000) für digitale Mikroskopie, das Folgendes aufweist:
   eine Modul-Trägervorrichtung (620, 720, 820, 920, 1020); und
   das kompakte Bildgebungsmodul (100, 200, 300) nach einem von 6-12;
   wobei die Modul-Trägervorrichtung (620, 720, 820, 920, 1020) eingerichtet ist, das kompakte Bildgebungsmodul (100, 200, 300) derart zu integrieren, dass es auf ein zu untersuchendes Objekt, vorzugsweise in Relation zu einem Probenträger (610, 710, 810, 910, 1010), ausgerichtet ist.
16. Ein Verfahren (100) zum Integrieren des kompakten Bildgebungsmoduls (100, 200, 300) nach einem von 1-13 in ein System (500, 600, 700, 800, 900, 1000) für digitale Mikroskopie, das Folgendes aufweist:
   einmaliges Erst-Kalibrieren (1102) von Komponenten des kompakten Bildgebungsmoduls (100, 200, 300) untereinander;
   reversibles Integrieren (1104) des kompakten Bildgebungsmoduls in ein System (500, 600, 700, 800, 900, 1000) nach Anspruch 14 oder 15 nach dem Erst-Kalibrieren.
17. Das Verfahren nach 16, wobei der Schritt des reversiblen Integrierens keine weitere Kalibrierung der Komponenten des kompakten Bildgebungsmoduls (100, 200, 300) untereinander aufweist.
18. Das Verfahren nach 16 oder 17, wobei der Schritt des reversiblen Integrierens ferner Folgendes aufweist:
   Befestigen (1105) des kompakten Bildgebungsmoduls (100, 200, 300) an der Modul-Trägervorrichtung (620, 720, 820, 920, 1020); oder
   Befestigen (1106) des Probenträgers (510, 610, 710, 810, 910, 1010) an dem kompakten Bildgebungsmodul (100, 200, 300); und
   vorzugsweise Anschließen (1107) des kompakten Bildgebungsmoduls (100, 200, 300) über einen einzigen externen Anschluss (49).

## Patentansprüche

1. Ein kompaktes Bildgebungsmodul (100, 200, 300) für digitale Mikroskopie-Anwendungen, das folgende Komponenten aufweist:
wenigstens eine Beleuchtungsvorrichtung (10);
wenigstens ein Objektiv (20);
wenigstens eine Kamera (30);
ein gemeinsames Gehäuse (40), in dem die wenigstens eine Beleuchtungsvorrichtung (10), das wenigstens eine Objektiv (20) und die wenigstens eine Kamera (30) angeordnet sind; und
wenigstens eine optische Leitervorrichtung (50), die eingerichtet ist, einen einfallenden Lichtstrahl von dem Objektiv (20) zu der wenigstens einen Kamera (30) zu leiten,
wobei die optische Leitervorrichtung (50) eine Flüssiglinse (52) zur Fokussierung aufweist;
wobei die Komponenten fest zueinander kalibriert sind und das Bildgebungsmodul (100, 200, 300) ohne weitere Kalibrierung reversibel in ein System (500, 600, 700, 800, 900, 1000) für digitale Mikroskopie integrierbar ist.

2. Das kompakte Bildgebungsmodul (100, 200, 300) nach Anspruch 1, das ferner eine Treibervorrichtung (60) zur Steuerung der Flüssiglinse (52) aufweist;
wobei die Flüssiglinse (52) vorzugsweise direkt hinter dem Objektiv (20) angeordnet ist.

3. Das kompakte Bildgebungsmodul (100, 200, 300) nach einem der vorhergehenden Ansprüche, wobei die optische Leitervorrichtung (50) und/oder die wenigstens eine Beleuchtungsvorrichtung (10) ferner jeweils wenigstens einen Umlenkspiegel (54) und/oder wenigstens einen Strahlenteiler (14) und/oder wenigstens eine Tubuslinse (56) und/oder wenigstens ein Emissionsfilter (58) und/oder wenigstens ein Anregungsfilter (15) aufweist.

4. Das kompakte Bildgebungsmodul (100, 200, 300) nach einem der vorhergehenden Ansprüche, wobei die wenigstens eine Beleuchtungsvorrichtung (10) eine Auflicht-Beleuchtungsvorrichtung aufweist; und
wobei die Auflicht-Beleuchtungsvorrichtung vorzugsweise wenigstens eine erste Leuchtdiode, LED, (11) aufweist und eingerichtet ist, wenigstens einen ersten Lichtstrahl von der wenigstens einen ersten LED (11) zum Beleuchten eines Objekts durch das Objektiv (20) hindurch zu emittieren.

5. Das kompakte Bildgebungsmodul (100, 200, 300) nach einem der vorhergehenden Ansprüche, wobei das gemeinsame Gehäuse (40) ein Profil mit einer im Wesentlichen rechteckigen Form oder mit einer L-Form hat;
wobei das Profil in der im Wesentlichen rechteckigen Form wenigstens zwei parallele kurze Seiten (41) und wenigstens zwei parallele lange Seiten (42) aufweist; und
wobei das Profil in der L-Form einen kurzen Schenkel (43) und einen langen Schenkel (44) aufweist.

6. Das kompakte Bildgebungsmodul (100, 200, 300) nach Anspruch 5, wobei:
in der im Wesentlichen rechteckigen Form, das Objektiv (20) entweder an einer der kurzen Seiten (41) angeordnet ist, oder an einem Randbereich einer der langen Seiten (42) in der Nähe einer der kurzen Seiten (41) angeordnet ist; oder
in der L-Form, das Objektiv an einer Kopfseite (45) am Ende des kurzen Schenkels (43) angeordnet ist.

7. Das kompakte Bildgebungsmodul (100, 200, 300) nach einem der Ansprüche 1-4, wobei das gemeinsame Gehäuse (40) ein Profil mit einer U-Form mit zwei gegenüberliegenden Seiten (46) im Inneren der U-Form aufweist; und
wobei die wenigstens eine Beleuchtungsvorrichtung (10) eine Durchlicht-Beleuchtungsvorrichtung aufweist.

8. Das kompakte Bildgebungsmodul (100, 200, 300) nach Anspruch 7, wobei die Durchlicht-Beleuchtungsvorrichtung wenigstens eine zweite Leuchtdiode (12), LED, aufweist und eingerichtet ist, wenigstens einen zweiten Lichtstrahl von einer ersten Seite (46a) der zwei gegenüberliegenden Seiten (46) zum Durchleuchten eines Objekts zum wenigstens einen Objektiv (20) hin zu emittieren;
wobei vorzugsweise das wenigstens eine Objektiv (20) eingerichtet ist, den zweiten Lichtstrahl auf einer zweiten Seite (46b) der zwei gegenüberliegenden Seiten (46) als den einfallenden Lichtstrahl zu empfangen.

9. Das kompakte Bildgebungsmodul (100, 200, 300) nach einem der Ansprüche 7-8, wobei die Durchlicht-Beleuchtungsvorrichtung ein Kontrastfilter (16) aufweist, das eingerichtet ist, Licht einer inhomogenen Lichtquelle homogen zu verteilen und Strahlen auszurichten.

10. Das kompakte Bildgebungsmodul (100, 200, 300) nach einem der Ansprüche 7-8, wobei die Durchlicht-Beleuchtungsvorrichtung ferner wenigstens eine LED-Treibervorrichtung (62) zur Steuerung der
LEDs (11, 12), wenigstens eine Kondensorlinse (18) und/oder wenigstens einen Umlenkspiegel (54) aufweist.

11. Das kompakte Bildgebungsmodul (100, 200, 300) nach einem der vorhergehenden Ansprüche, wobei das gemeinsame Gehäuse (40) eine Dicke im Wesentlichen im Bereich von 8 mm bis 100 mm, vorzugsweise im Bereich von 8 mm bis 50 mm, vorzugsweise im Bereich von 30 mm bis 50 mm, vorzugsweise 40 mm aufweist; und wobei das kompakte Bildgebungsmodul (100, 200, 300) über einen einzigen externen Anschluss (49) betrieben werden kann.

12. Ein System (500) für digitale Mikroskopie, das Folgendes aufweist:
einen Probenträger (510); und
das kompakte Bildgebungsmodul (300) nach einem der Ansprüche 7-10;
wobei der Probenträger (510) eingerichtet ist, derart mit dem kompakten Bildgebungsmodul (300) integriert zu werden, dass das kompakte Bildgebungsmodul (300) auf ein zu untersuchendes Objekt ausgerichtet ist; oder
wobei das kompakte Bildgebungsmodul (300) eingerichtet ist, derart mit dem Probenträger (510) integriert zu werden, dass das kompakte Bildgebungsmodul (300) auf ein zu untersuchendes Objekt ausgerichtet ist.

13. Ein System (600, 700, 800, 900, 1000) für digitale Mikroskopie, das Folgendes aufweist:
eine Modul-Trägervorrichtung (620, 720, 820, 920, 1020); und
das kompakte Bildgebungsmodul (100, 200, 300) nach einem der Ansprüche 5-10;
wobei die Modul-Trägervorrichtung (620, 720, 820, 920, 1020) eingerichtet ist, das kompakte Bildgebungsmodul (100, 200, 300) derart zu integrieren, dass es auf ein zu untersuchendes Objekt, vorzugsweise in Relation zu einem Probenträger (610, 710, 810, 910, 1010), ausgerichtet ist.

14. Ein Verfahren (100) zum Integrieren des kompakten Bildgebungsmoduls (100, 200, 300) nach einem der Ansprüche 1-11 in ein System (500, 600, 700, 800, 900, 1000) für digitale Mikroskopie, das Folgendes aufweist:
einmaliges Erst-Kalibrieren (1102) der Komponenten des kompakten Bildgebungsmoduls (100, 200, 300) untereinander;
reversibles Integrieren (1104) des kompakten Bildgebungsmoduls in ein System (500, 600, 700, 800, 900, 1000) nach Anspruch 14 oder 15 nach dem Erst-Kalibrieren.

15. Das Verfahren nach Anspruch 14, wobei der Schritt des reversiblen Integrierens ferner Folgendes aufweist:
Befestigen (1105) des kompakten Bildgebungsmoduls (100, 200, 300) an der Modul-Trägervorrichtung (620, 720, 820, 920, 1020); oder
Befestigen (1106) des Probenträgers (510, 610, 710, 810, 910, 1010) an dem kompakten Bildgebungsmodul (100, 200, 300); und
vorzugsweise Anschließen (1107) des kompakten Bildgebungsmoduls (100, 200, 300) über einen einzigen externen Anschluss (49).
